## Europäisches Patentamt

## European Patent Office

## Office européen des brevets

(19)

(11) Veröffentlichungsnummer: **0 034 308**
**B1**

(12)

# EUROPÄISCHE PATENTSCHRIFT

(45) Veröffentlichungstag der Patentschrift:
14.12.83

(51) Int. Cl.³: **H 04 Q 11/04, H 04 M 3/56**

(21) Anmeldenummer: **81100819.2**

(22) Anmeldetag: **05.02.81**

(54) **Verfahren und Schaltung für Konferenzbetrieb in PCM-Zeitmultiplex-Fernmeldeanlagen.**

(30) Priorität: **15.02.80 DE 3005739**

(43) Veröffentlichungstag der Anmeldung:
**26.08.81 Patentblatt 81/34**

(45) Bekanntmachung des Hinweises auf die Patenterteilung:
**14.12.83 Patentblatt 83/50**

(84) Benannte Vertragsstaaten:
**AT BE CH FR GB IT LI NL**

(56) Entgegenhaltungen:
**EP - A - 0 004 307**
**EP - A - 0 005 833**
**DE - A - 2 617 344**
**US - A - 4 054 757**

(73) Patentinhaber: **Nixdorf Computer Aktiengesellschaft, Fürstenallee 7, D-4790 Paderborn (DE)**

(72) Erfinder: **Simon, Joachim Willy, Dipl.-Phys., Bergstrasse 32, D-3390 Goslar (DE)**

(74) Vertreter: **Schaumburg, Schulz-Dörlam & Thoenes, Mauerkircherstrasse 31, D-8000 München 80 (DE)**

## Verfahren und Schaltung für Konferenzbetrieb in PCM-Zeitmultiplex-Fernmeldeanlagen

Die Erfindung betrifft ein Verfahren zur Steuerung der Übertragung von PCM-Signalen zwischen Anschlussstellen eines PCM-Zeitmultiplex-Fernmeldenetzes in einem Konferenzbetrieb mittels einer zentralen Konferenz-Steuerschaltung, bei dem jeder in eine Verbindung einbezogenen Anschlussstelle ein Sendepuls mit zyklisch wiederholt in aufeinander folgenden Pulsrahmen auftretenden Sendezeitschlitzen und ein Empfangspuls mit zyklisch wiederholt in aufeinander folgenden Pulsrahmen auftretenden Empfangszeitschlitzen durch eine Zentraleinheit zugeteilt ist, bei dem in einem Pulsrahmen von den konferenzbeteiligten Anschlussstellen abgegebene und in der zentralen Konferenz-Steuerschaltung empfangene PCM-Signale unter ggf. erforderlicher Linearisierung unmittelbar bei ihrem Empfang algebraisch summiert, zwischengespeichert und zur Übertragung an die jeweilige konferenzbeteiligte Anschlussstelle jeweils unter Aussonderung der von dieser Anschlussstelle abgegebenen PCM-Signale einer Teilsummenbildung unterzogen werden, bei dem den Teilsummen entsprechende PCM-Signale ggf. nach Delinearisierung während eines weiteren Pulsrahmens zu den konferenzbeteiligten Anschlussstellen gesendet werden, und bei dem Zeitschlitze innerhalb eines vorbestimmten Abschnitts des jeweiligen Pulsrahmens für die Übertragung nicht konferenzrelevanter Signale vorgesehen sind.

Ferner betrifft die Erfindung eine Schaltungsanordnung zur Durchführung dieses Verfahrens.

Bei einem durch die DE-A1-2 617 344 bekannten Verfahren werden die in der zentralen Konferenz-Steuerschaltung empfangenen PCM-Signale eines Pulsrahmens zunächst gespeichert. Dann werden sie in der angegebenen Weise verarbeitet und gleichzeitig PCM-Signale des nächstfolgenden Pulsrahmens gespeichert. Dabei werden Zwischenergebnisse der Signalverarbeitung für jede Konferenzverbindung gespeichert und daraus Endergebnisse für jede Konferenzverbindung abgeleitet und diese Endergebnisse mit Beginn des wiederum nächstfolgenden Pulsrahmens an die konferenzbeteiligten Anschlussstellen gesendet.

Durch die Speicherung der empfangenen PCM-Signale während eines Pulsrahmens vor der eigentlichen Verarbeitung und die weitere Speicherung von Zwischenergebnissen ist bei diesem Verfahren eine Verzögerung zwischen Empfangs- und Sendevorgang in der zentralen Konferenz-Steuerschaltung von zwei Pulsrahmen unvermeidbar. Damit ist aber wiederum der Nachteil verbunden, dass innerhalb der zentralen Konferenz-Steuerschaltung ein relativ hoher Aufwand für die Signalübertragung zwischen den einzelnen Speichervorrichtungen verursacht wird. Dies fällt natürlich besonders dann ins Gewicht, wenn eine parallele Signalverarbeitung bzw. Signalübertragung mit einer hohen Anzahl von Zeitschlitzen pro Pulsrahmen durchgeführt wird. Eine parallele Signalverarbeitung und Signalübertragung ist aber aus noch zu beschreibenden Gründen für ein PCM-Zeitmultiplex-Fernmeldenetz vorteilhaft.

Ein Verfahren eingangs genannter Art ist durch die EP-A1-0 004 307 bekannt. Dieses Verfahren wird etwa gleichartig wie das vorstehend genannte Verfahren durchgeführt, jedoch wird die algebraische Summation unmittelbar bei Empfang der PCM-Signale in der zentralen Konferenz-Steuerschaltung durchgeführt. Dabei ist ein Summenspeicher vorgesehen, der adressiert, gelesen und beschrieben werden muss, wodurch Probleme bei der zeitlichen Steuerung der Verarbeitung zweier unmittelbar aufeinander folgender Empfangszeitschlitze auftreten können.

Der Inhalt des Summenspeichers muss über die Dauer des auf einen aktuellen jeweils folgenden Pulsrahmens erhalten bleiben, da die teilnehmerspezifische Teilsummenbildung erst unmittelbar vor dem Aussenden in dem auf den Empfang folgenden Pulsrahmen erfolgt. Für diese teilnehmerspezifische Teilsummenbildung muss das Gesamtsummen-Codewort mit dem zuletzt empfangenen Teilnehmer-Codewort algebraisch verknüpft werden. Daraus folgt, dass auch alle Teilnehmer-Codewörter über die Pulsrahmengrenze hinaus für den gesamten folgenden Pulsrahmen gespeichert werden müssen. Dies erzwingt die von Pulsrahmen zu Pulsrahmen abwechselnde Benutzung vollständiger Konferenzspeicher.

Es ist Aufgabe der Erfindung, ein Verfahren anzugeben, durch das die Signalverarbeitung in einer zentralen Konferenz-Steuerschaltung wesentlich schneller erfolgt, so dass eine wirksame Nutzung der Vorteile einer parallelen Signalverarbeitung und Signalübertragung möglich ist, dabei aber ein hoher Aufwand für relativ lange Signalzwischenspeicherung vermieden wird.

Diese Aufgabe wird für ein Verfahren eingangs genannter Art erfindungsgemäss dadurch gelöst, dass die algebraisch summierten PCM-Signale anschlussstellenspezifisch höchstens bis zum Ablauf des am Ende des jeweils aktuellen Pulsrahmens liegenden Abschnitt nicht konferenzrelevanter Signale zwischengespeichert werden, dass die teilnehmerspezifische Teilsummenbildung und eine Zwischenspeicherung dieser Teilsummen in diesem Abschnitt erfolgt und dass den Teilsummen entsprechende PCM-Signale unmittelbar nach diesem Abschnitt mit Beginn des auf den aktuellen Pulsrahmen unmittelbar folgenden Pulsrahmens zu den konferenzbeteiligten Anschlussstellen gesendet werden.

Durch die Erfindung erübrigt sich eine Umspeicherung aller in der zentralen Konferenz-Steuerschaltung empfangenen PCM-Signale einer Pulsrahmenzeit, bevor ihre Verarbeitung beginnt. Wesentlich hierfür ist, dass die empfangenen PCM-Signale jeweils mit ihrem Eintreffen auf eine Summiereinrichtung geleitet werden, so dass bereits während des jeweiligen aktuellen Pulsrahmens eine Summierung stattfindet und dann zu einem bestimmten Zeitpunkt innerhalb einer Pulsrahmenzeit die Signalsumme aller konferenzbeteiligten Anschlussstellen zur Verfügung steht. Gleichzeitig, also parallel zu diesem Vorgang, wird jedes einzelne empfangene PCM-Signal höchstens bis zum Beginn des nächstfolgenden Abschnitts nicht konferenzrelevanter Signale zwischengespeichert, so dass es nach Bildung der Signalsumme verfügbar ist, um durch eine Subtraktion die an die jeweilige Anschlussstelle zu sendende Teilsumme von PCM-Signalen zu bilden. Die Erfindung erschöpft sich nun nicht in diesem praktisch verzögerungsfreien Beginn der Signalverarbeitung, sondern zusätzlich ist vorgesehen, dass die Teilsummenbildung zur Ableitung der an die konferenzbeteiligten Anschlussstellen zu sendenden PCM-Signale noch in dem Abschnitt nicht konferenzrelevanter Signale erfolgt. Dies beruht auf dem in der Zeitmultiplex-Vermittlungstechnik angewandten Prinzip der Unterteilung eines Pulsrahmens in Zeitschlitze, die konferenzrelevanten Signalen zugeordnet sind, und in Zeitschlitze, die nicht konferenzrelevanten Signalen zugeordnet sind. Solche nicht konferenzrelevanten Signale sind Hörtöne zur Signalisierung bestimmter Schalt- oder Betriebszustände des Vermittlungssystems, also z.B. Amtswählton, interner Wählton, Freizeichen, Besetztton, Aufmerksamkeitston sowie andere Signale. Wenn nun in diesem Abschnitt eines jeweiligen Pulsrahmens konferenzrelevante Signale nicht mehr gesendet oder empfangen werden können, so kann diese Zeit dazu genutzt werden, die algebraische Ableitung der Signalteilsummen vorzunehmen, die an die konferenzbeteiligten Anschlussstellen gesendet werden müssen. Dadurch wird es möglich, diese Teilsummen dann bereits unmittelbar nach dem Abschnitt nicht konferenzrelevanter Signale an die konferenzbeteiligten Anschlussstellen zu senden.

Die Erfindung vermeidet also eine längere Verzögerung zwischen dem jeweiligen Empfangs- und Sendevorgang, so dass auch der entsprechende Aufwand für die Signalübertragung zwischen relativ grossen Speichervorrichtungen nicht erforderlich ist. Es sind lediglich zusätzlich zu einer Summiereinrichtung mit Summenregister Zwischenspeicher erforderlich, die die empfangenen einzelnen PCM-Signale und die an die konferenzbeteiligten Anschlussstellen zu übertragenden Teilsummensignale für eine Zeit zwischenspeichern müssen, die in jedem Falle kürzer als die Zeit eines Pulsrahmens ist.

Die Steuerung der Signalverarbeitung in der zentralen Konferenz-Steuerschaltung wird insgesamt vereinfacht, denn die Signalverarbeitung eines jeden Pulsrahmens ist mit dem Ende dieses Pulsrahmens abgeschlossen und die für sie massgebende Periode fällt mit dem jeweils aktuellen Pulsrahmen zusammen.

Die in einem PCM-Zeitmultiplex-Fernmeldenetz vorgesehene Zentraleinheit ordnet den konferenzbeteiligten Anschlussstellen Relativadressen zu, die zum Aufbau und zur Haltung der Konferenzverbindung erforderlich sind. Das Verfahren nach der Erfindung wird nun vorteilhaft so durchgeführt, dass diese Relativadressen auch zur Zwischenspeicherung der empfangenen PCM-Signale und der Zwischensummen sowie zum Senden der Zwischensummen verwendet werden. In der zentralen Konferenz-Steuerschaltung sind deshalb besondere Verfahrensschritte zur Berechnung interner Speicheradressen nicht erforderlich.

Besonders vorteilhaft wird die Teilsummenbildung sowie deren Zwischenspeicherung durch Hilfstaktsignale gesteuert, deren Frequenz vorzugsweise den doppelten Wert des Zeitschlitz-Folgetaktes hat. Dadurch ist es möglich, eine relativ grosse Anzahl konferenzbeteiligter Anschlussstellen auch dann in eine Konferenzverbindung einzubeziehen, wenn relativ wenige Zeitschlitze innerhalb des Abschnitts nicht konferenzrelevanter Signale eines Pulsrahmens zur Verfügung stehen. Die Berechnung der Teilsummen aus den zwischengespeicherten einzelnen PCM-Signalen und der Signalsumme durch Subtraktion erfolgt praktisch verzögerungsfrei, so dass in einem Zeitschlitzintervall zwei derartige Berechnungen einschliesslich des Einschreibens in einen Sendezwischenspeicher durchgeführt werden können.

Innerhalb der zentralen Konferenz-Steuerschaltung werden bei einer Weiterbildung der Erfindung die Schreib-Leseimpulse und die Relativadressensignale zur Ansteuerung von Zwischenspeichern für den Empfangs- und den Sendevorgang getrennt während des Abschnitts konferenzrelevanter Signale eines Pulsrahmens erzeugt. Dies entspricht der Tatsache, dass in einem Zeitmultiplex-Vermittlungssystem der Zeitschlitz-Folgetakt und die zugehörigen Synchronisationssignale für den Empfangs- und den Sendevorgang zwar synchron, aber nicht notwendig isochron vorliegen. Es sind relative Verschiebungen zwischen Sende- und Empfangssteuersignalen von bis zu einer Taktperiode möglich.

Durch die praktisch verzögerungsfreie Arbeitsweise des Verfahrens beim Empfang der PCM-Signale von den einzelnen konferenzbeteiligten Anschlussstellen ergibt sich eine sehr einfache Verfahrensweise für die Bereitstellung der Relativadressensignale und die jeweils zugeordneten, einen gesetzten Zeitschlitz angebenden Signale in der zentralen Konferenz-Steuerschaltung, die als Schreib-Leseimpulse für die Zwischenspeicherung verwendet werden. Das Verfahren wird hierbei vorteilhaft derart durchgeführt, dass beim Empfang und beim Senden jeweils gesteuert durch den Empfangs- bzw. Sendezeitschlitz-Folgetakt eine modulo-n-Adressenzählung für ein Relativadressregister und für ein Empfangs- bzw. Sendezeitschlitzregister erfolgt, deren Schreib-Lese-Steuerung entsprechend der Zuordnung der Relativadressen zu bestimmten Empfangs- bzw. Sendezeitschlitzen aktiviert wird, wobei n die Zahl der Zeitschlitze pro Pulsrahmen ist.

Diese Weiterbildung erfordert lediglich zwei relativ kleine Register, die die von der Zentraleinheit abgegebenen Relativadressen und Zeitschlitz-Setzbefehle zeitlich geordnet speichern. Die Register müssen dabei eine lediglich dem Teil des jeweiligen Pulsrahmens entsprechende Kapazität haben, der konferenzrelevante Signale führen kann, wenn die Teilsummenbildung sowie deren Zwischenspeicherung in beschriebener Weise durch Hilfstaktsignale gesteuert wird.

Die beiden Register werden dabei so betrieben, dass die jeweilige Schreib-Lesesteuerung zyklisch mit der Adressenzählung im ersten Halbtakt eines Empfangs- bzw. Sendezeitschlitz-Folgetaktsignals ein Lesen des Empfangs- bzw. Sendezeitschlitzregisters und im zweiten Halbtakt ein Schreiben des gelesenen Inhalts ggf. nach Änderung durch einen von der Zentraleinheit abgegebenen Zeitschlitz-Setzbefehl in Verbindung mit einer zugeordneten Relativadresse bewirkt, die gleichzeitig in das Relativadressregister eingeschrieben wird, und dass die Schreib-Lesesteuerung bei Auftreten eines gesetzten Empfangs- bzw. Sendezeitschlitzes im Zuge des zyklischen Lese-Schreibvorgangs ein Lesen des Inhalts des jeweiligen Relativadressregisters und Zeitschlitzregisters und eine Weiterleitung der gelesenen Signale als Relativadressensignale und Schreibimpulse für die Zwischenspeicherung der empfangenen PCM-Signale bzw. eine Weiterleitung der gelesenen Signale als Relativadressensignale und Leseimpulse für das Senden der Zwischensummen an die konferenzbeteiligten Anschlussstellen veranlasst.

Diese Arbeitsweise des Verfahrens ermöglicht, wie noch ersichtlich wird, eine Minimierung des erforderlichen schaltungstechnischen Aufwands und trotzdem gezielte Änderungen nur einer einzigen, einem Bit entsprechenden Speicherzelle. Insbesondere wirkt sich das auf den Raum- und Leistungsbedarf für die Register aus, der wesentlich geringer als bei Verwendung nach anderem Prinzip arbeitender Speicherstrukturen mit wahlfreiem Zugriff ist.

Es ist darauf hinzuweisen, dass die weiter oben erläuterte Hilfstaktsteuerung der Relativadressenabgabe auch mit einer höheren als der doppelten Zeitschlitz-Folgetaktfrequenz durchgeführt werden kann. Dadurch ist es möglich, die Zahl der konferenzbeteiligten Anschlussstellen pro Verarbeitungskanal weiter zu erhöhen. Dabei ist es auch möglich, die verwendeten Addier-Subtrahiereinrichtungen in einem Multiplexbetrieb arbeiten zu lassen.

Eine Schaltungsanordnung zur Durchführung des erfindungsgemässen Verfahrens enthält in Übereinstimmung mit dem Stand der Technik nach der DE-OS 2 617 344 einen über einen Empfänger bzw. einen Sender an die Multiplexleitung des PCM-Zeitmultiplex-Fernmeldenetzes angeschlossenen Verarbeitungskreis für die von den konferenzbeteiligten Anschlussstellen empfangenen PCM-Signale, der ggf. eine Expanderschaltung zur Linearisierung der empfangenen PCM-Signale, eine Addier-Subtrahiereinrichtung mit zugeordnetem Summenregister, ggf. eine Kompressorschaltung zur Delinearisierung der zu sendenden PCM-Signale sowie Zwischenspeicher enthält und dessen Funktion durch Steuersignale und Relativadressensignale gesteuert wird, die über logische Steuerschaltungen aus von der Zentraleinheit empfangenen Zeitschlitz-Setzbefehlen, Zeitschlitz-Folgetaktsignalen, Zeitschlitz-Synchronsignalen und Relativadressen abgeleitet werden.

Diese Schaltungsanordnung ist in weiterer Ausbildung des Erfindungsgedankens derart getroffen, dass der Verarbeitungskreis zwischen Empfänger und Sender mindestens einen Verarbeitungskanal aufweist, der parallel zueinander ein Empfangsspeicherregister und eine Addier-Subtrahiereinrichtung mit Summenregister, deren Subtrahierteil mit dem Ausgang des Empfangsspeicherregisters verbunden ist, sowie ein dieser Parallelanordnung nachgeordnetes Sendespeicherregister enthält.

Dieser einfache Aufbau der Schaltungsanordnung ergibt sich aus dem Grundkonzept der Erfindung, auf eine Umspeicherung der von den konferenzbeteiligten Anschlussstellen empfangenen PCM-Signale vor Beginn ihrer Verarbeitung zu Teilsummen zu verzichten und hierzu den Abschnitt eines jeweiligen Pulsrahmens auszunutzen, in dem keine konferenzrelevanten Signale mehr auftreten können.

Vorteilhaft ist die Schaltungsanordnung derart weiter ausgebildet, dass mehrere zueinander parallele Verarbeitungskanäle zwischen Empfänger und Sender vorgesehen sind, deren Steuersignale und Relativadressensignale über ihnen gemeinsame logische Steuerschaltungen abgeleitet werden.

Mit dieser Ausbildung der Schaltungsanordnung ergibt sich ein sehr wesentlicher Vorteil, der darin besteht, dass die Zahl konferenzbeteiligter Anschlussstellen über denjenigen Wert hinaus erhöht werden kann, der eigentlich durch die Breite eines Pulsrahmenabschnitts mit nicht konferenzrelevanten Signalen vorgegeben ist. Sind mehrere zueinander parallele Verarbeitungskanäle zwischen Empfänger und Sender der zentralen Konferenz-Steuerschaltung vorhanden, so können gleichzeitig mehrere Konferenzverbindungen abgewickelt werden, indem die von der Zentraleinheit abgegebenen Steuerkriterien den Verarbeitungskanälen entsprechend zugeordnet werden. Es ist dann möglich, einen Zeitschlitz des Abschnitts nicht konferenzrelevanter Signale nicht für eine echte konferenzbeteiligte Anschlussstelle vorzusehen, sondern in zwei Verarbeitungskanälen diesem Zeitschlitz ein Blindkriterium zuzuordnen, durch das es möglich ist, die PCM-Signalsummen der Teilkonferenzen der einzelnen Verarbeitungskanäle untereinander auszutauschen, so dass sie in dem jeweiligen Summenregister eines Verarbeitungskanals zur gesamten Gesprächssignalsumme auflaufen. Der Effekt dieses Vorgangs besteht darin, dass die Teilsumme der jeweils anderen Teilkonferenz um einen Pulsrahmen verzögert im zugehörigen Verarbeitungskanal empfangen wird, was aber auf die Gesprächsqualität praktisch ohne Auswirkungen bleibt.

Weitere Einzelheiten und verfahrens- sowie schaltungstechnische Vorteile der Erfindung ergeben sich aus der folgenden Beschreibung eines Ausführungsbeispieles anhand der Figuren. Es zeigen:

Fig. 1 eine schematische Darstellung des zeitlichen Ablaufs eines Pulsrahmens und der zugehörigen Funktionen in einer Konferenz-Steuerschaltung,

Fig. 2 ein Prinzipbild einer Konferenz-Steuerschaltung die nach dem erfindungsgemässen Verfahren arbeitet.

Fig. 3 die prinzipielle Arbeitsweise einer logischen Steuerschaltung zur Ableitung von Relativadressensignalen und Schreib-Leseimpulsen während eines Pulsrahmens,

Fig. 4 die prinzipielle Arbeitsweise einer logischen Adressierschaltung in Verbindung mit einem Hilfstaktgenerator und

Fig. 5 die zeitliche Zuordnung zwischen einem Empfangszeitschlitz-Folgetakt und einem Hilfstaktsignal.

Das im folgenden zu beschreibende Verfahren dient der Abwicklung von Konferenzverbindungen zwischen Anschlussstellen eines PCM-Zeitmultiplex-Fernmeldenetzes, wobei unter Anschlussstellen Teilnehmerstellen, besondere Tongeneratoren zur Erzeugung von Hörtönen oder auch Tonaufzeichnungsgeräte zu verstehen sind. Das Verfahren arbeitet mit Parallelübertragung von PCM-Signalen mit einer Wortlänge von 8 Bit unter Verwendung eines sich periodisch wiederholenden Pulsrahmens mit einer Folgefrequenz von 8 kHz und mit 256 Zeitschlitzen. Das Verfahren kann selbstverständlich auch in Verbindung mit einer Serienübertragung der PCM-Signale eingesetzt werden, wobei dann für die zentrale Konferenzsteuerschaltung entsprechende Serien-Parallel- bzw. Parallel-Serienwandler vorgesehen sein müssen.

Bei einer Pulsrahmen-Folgefrequenz und Abtastfrequenz der zu übertragenden Signale von 8 kHz ergibt sich ein Übertragungsfrequenzbereich von bis zu 4 kHz. Die analogen Abtastwerte der momentanen Signalwechselspannung werden üblicherweise nichtlinear codiert, und jeder Abtastwert wird mit einer Wortlänge von 8 Bit übertragen. Hierzu ist dann pro Signalkanal eine Übertragungsrate von 64 kBit/s erforderlich. Bei Fernvermittlungssystemen ist es ferner üblich, bis zu 32 Sprachkanäle seriell zu übertragen, so dass sich eine Übertragungsrate von 2,048 MBit/s ergibt. In der Nebenstellentechnik sind jedoch erheblich mehr Zeitschlitze bzw. Sprachkanäle erforderlich, um eine jeweils notwendige Verkehrskapazität zu verwirklichen. Dieser Forderung wird die Parallelübertragung der PCM-Signale bei einem periodischen Pulsrahmen von 125 $\mu$s Länge und einer Systemtaktfrequenz von 2,048 MHz mit 256 Zeitschlitzen pro Pulsrahmen gerecht.

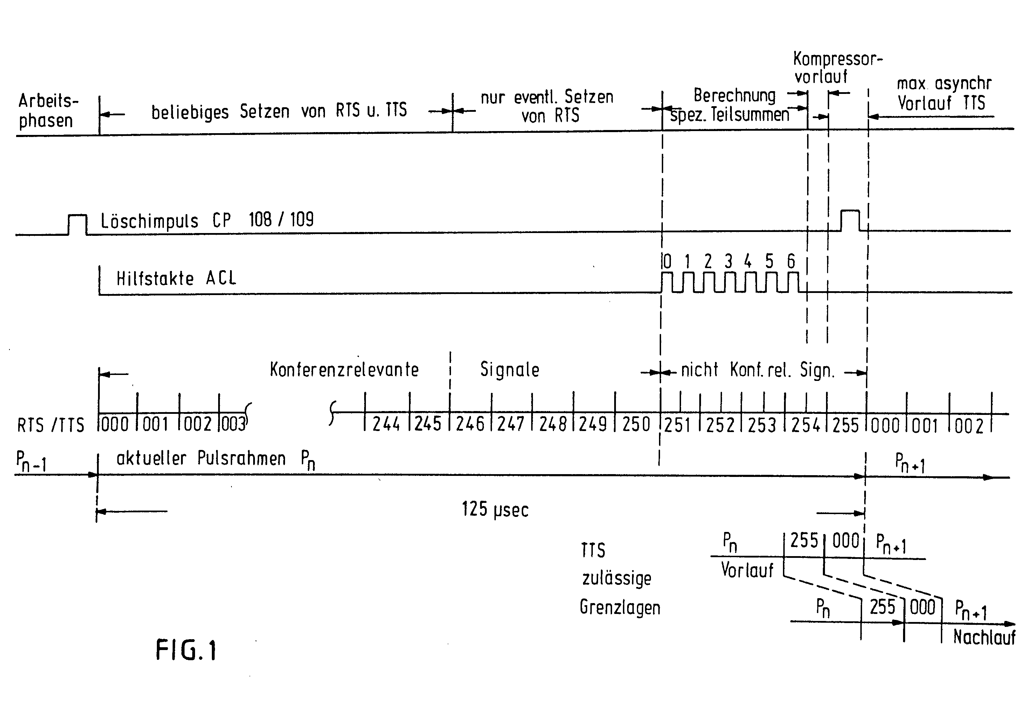

Fig. 1 zeigt nun als Ausführungsbeispiel der Erfindung für ein solches Übertragungsprinzip die einzelnen Arbeitsphasen während eines aktuellen Pulsrahmens $P_n$ von 125 $\mu$s Länge. Der Pulsrahmen $P_n$ ist in 256 Zeitschlitze RTS unterteilt, die von 000 bis 255 numeriert sind. Wie bereits ausgeführt, sind die Pulsrahmen ferner in zwei Abschnitte unterteilt, die für die Übertragung konferenzrelevanter Signale bzw. nicht konferenzrelevanter Signale vorgesehen sind. Die Zeitschlitze 000 bis 250 sind konferenzrelevanten Signalen und die Zeitschlitze 251 bis 255 nicht konferenzrelevanten Signalen zugeordnet. Dies sind beispielsweise Hörtöne zur Signalisierung bestimmter Schalt- oder Betriebszustände des Vermittlungssystems. Während dieses Abschnitts eines Pulsrahmens können deshalb in der zentralen Konferenz-Steuerschaltung keine Signale von konferenzbeteiligten Anschlussstellen empfangen oder an diese gesendet werden.

Wie aus Fig. 1 hervorgeht, werden während des Abschnitts nicht konferenzrelevanter Signale bei den Zeitschlitzen 251 bis 254 Hilfstakte 0 bis 6 erzeugt, die in noch zu beschreibender Weise zur Berechnung von Teilsummensignalen dienen, die an die einzelnen konferenzbeteiligten Anschlussstellen im nächstfolgenden Pulsrahmen $P_{n+1}$ gesendet werden. Ferner wird ein Löschimpuls CP während des letzten Zeitschlitzes 255 des Pulsrahmens $P_n$ erzeugt, mit dem in noch zu beschreibender Weise ein Summenregister gelöscht wird, um dieses zur Aufsummierung empfangener PCM-Signale des nächsten Pulsrahmens $P_{n+1}$ vorzubereiten.

Aus Fig. 1 ist ferner zu erkennen, dass die für die nicht konferenzrelevanten Signale vorgesehenen Zeitschlitze 251 bis 255 am Ende des Pulsrahmens $P_n$ vorgesehen sind. Ebenso könnte dieser Abschnitt des Pulsrahmens $P_n$ jedoch auch an einer anderen Stelle vorgesehen sein, wodurch der zeitliche Einsatz der noch zu beschreibenden Steuerung für die Übertragung konferenzrelevanter Signale einerseits und für die Berechnung von Teilsummensignalen andererseits ein anderer wäre und die Periode des Empfangs und der Verarbeitung von PCM-Signalen nicht mit dem aktuellen Pulsrahmen $P_n$ zusammenfallen würde.

Die Zeitschlitze 000 bis 245 können beliebig als Empfangszeitschlitze RTS oder als Sendezeitschlitze TTS gesetzt sein. Die Zeitschlitze 246 bis 250 können als Empfangszeitschlitze RTS für Hörtöne gesetzt sein, die konferenzrelevant sind, so dass sie für die zentrale Konferenz-Steuerschaltung als Sendezeitschlitze TTS nicht in Betracht kommen. Die Belegung dieser Zeitschlitze als Sendezeitschlitze TTS wird innerhalb der noch zu beschreibenden zentralen Konferenz-Steuerschaltung verhindert. Gleiches gilt auch für den Abschnitt der nicht konferenzrelevanten Signale bzw. für die Zeitschlitze 251 bis 255. Die Zeitschlitze 000 bis 250 können also als Sendezeitschlitze TTS der konferenzbeteiligten Anschlussstellen und für Hörtöne in der zentralen Konferenz-Steuerschaltung als Empfangszeitschlitze RTS ggf. mit Zuordnung von Relativadressen der konferenzbeteiligten Anschlussstellen gesetzt werden. Die Zeitschlitze 000 bis 245 können ferner als Sendezeitschlitze TTS der zentralen Konferenz-Steuerschaltung mit jeweils zugeordneter Relativadresse gesetzt werden.

In Fig. 1 sind ferner zulässige Grenzlagen für einen Vorlauf bzw. Nachlauf von Teilen der noch zu beschreibenden zentralen Konferenz-Steuerschaltung gezeigt, die später erläutert werden.

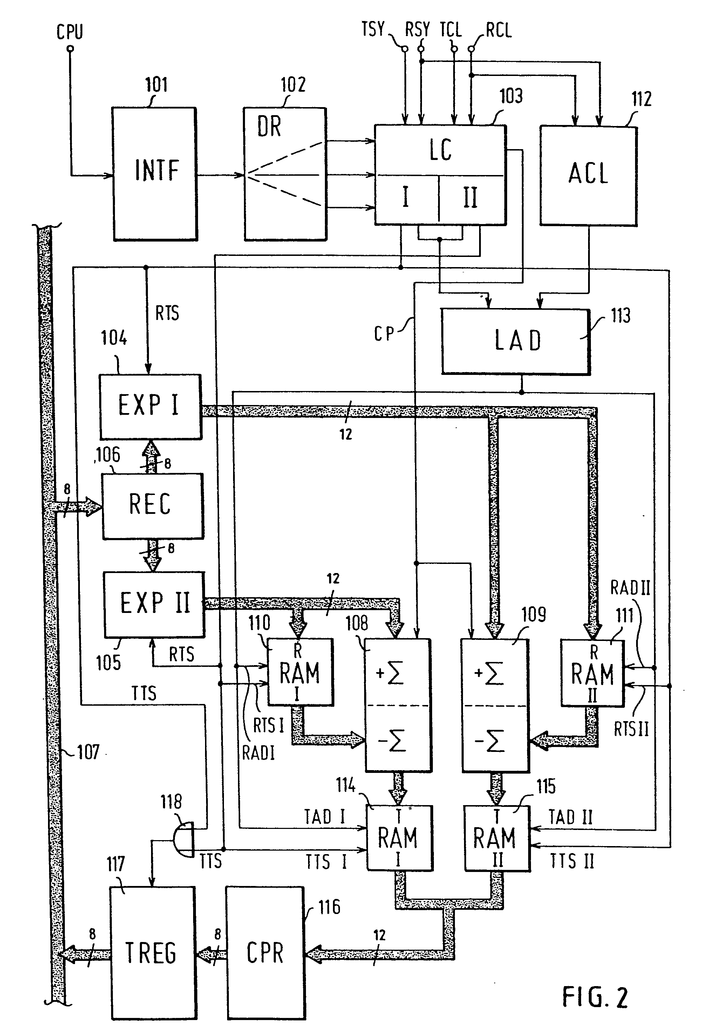

Fig. 2 zeigt im Prinzip ein Ausführungsbeispiel einer zentralen Konferenz-Steuerschaltung, die sich zur Durchführung des erfindungsgemässen Verfahrens eignet. Diese Steuerschaltung enthält zwei Konferenz-Verarbeitungskanäle I und II, die von ihnen gemeinsamen logischen Steuerschaltungen gesteuert werden.

Eine Zentraleinheit CPU ist über eine Schnittstelle 101 mit einem Verteilregister 102 verbunden. Die Zentraleinheit CPU ist beispielsweise ein Steuerrechner, wie er üblicherweise in Zeitmultiplex-Fernmeldenetzen eingesetzt wird. Dieser Steuerrechner verwaltet eine Liste der konferenzbeteiligten Anschlussstellen und ordnet ihnen jeweils eine dreistellige binäre Relativadresse zu, die während einer Konferenzverbindung auch zur Ableitung von Relativadressensignalen noch zu beschreibender Speicherregister dient. Die Arbeitsweise der Zentraleinheit CPU ist dem Fachmann geläufig und muss deshalb hier nicht näher erläutert werden.

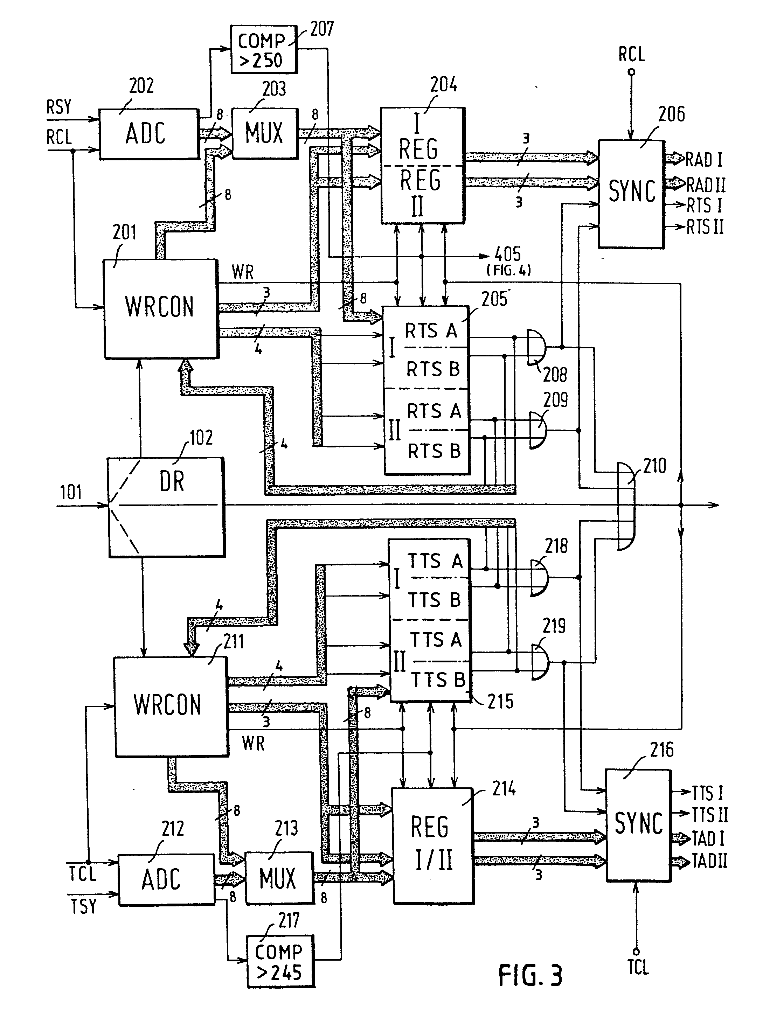

Das Verteilregister 102 übernimmt von der Schnittstelle 101 nach Verarbeitungskanälen I und II getrennt die Setz- und Löschbefehle für Sendezeitschlitze TTS und Empfangszeitschlitze RTS sowie die jeweils zugeordneten Zeitschlitznummern und Relativadressen in gegenseitiger vorgegebener Zuordnung und leitet diese Signale an eine logische Steuerschaltung 103 weiter, von der Relativadressensignale und Schreib-Leseimpulse als Steuersignale zur Speicherung oder zum Lesen in noch zu beschreibender Weise zu empfangender bzw. zu sendender PCM-Signale abgegeben werden. Diese logische Steuerschaltung 103 wird weiter unten anhand der Fig. 3 noch näher erläutert.

Die logische Steuerschaltung 103 wird ihrerseits durch die Zeitschlitz-Folgetakt RCL und TCL und durch die zugehörigen Zeitschlitz-Synchronsignale RSY und TSY gesteuert und gibt periodisch bei einem gesetzten Empfangszeitschlitz RTS für dessen Dauer einen Öffnungsimpuls an einen Expander 104 bzw. 105, dem die von einer Multiplexleitung mit einem Empfänger 106 empfangenen achtstelligen PCM-Signale zugeführt werden. Der Expander 104 bzw. 105 dient zur Linearisierung der achtstelligen PCM-Signale und gibt entsprechend 12-stellige Linearworte ab. Der Expander 104 ist für den Verarbeitungskanal I, der Expander 105 für den Verarbeitungskanal II vorgesehen. Jeder Expander kann z.B. als programmierbarer Festwertspeicher ausgeführt sein, zu dessen Adressierung die sieben niedrigstwertigen Bits der achtstelligen Signalworte verwendet werden. Das höchstwertige Bit bleibt erhalten und wird bei der noch zu beschreibenden algebraischen Verarbeitung der PCM-Signale zur Steuerung einer Addier-Subtrahiereinrichtung mit Summenregister 108 bzw. 109 verwendet.

Die Linearwörter werden in dem jeweiligen Verarbeitungskanal I bzw. II parallel einem Empfangsspeicherregister 110 bzw. 111 sowie der Addier-Subtrahiereinrichtung mit Summenregister 108 bzw. 109 zugeführt. Dadurch werden sie praktisch mit ihrem Eintreffen im jeweils aktuellen Pulsrahmen einerseits im Empfangsspeicherregister, andererseits laufend in der Addier-Subtrahiereinrichtung 108 bzw. 109 aufaddiert, so dass das jeweils zugeordnete Summenregister bereits am Ende des Abschnitts konferenzrelevanter Signale des aktuellen Pulsrahmens die Signalsumme dieses Pulsrahmens enthält. Die Zwischenspeicherung in dem Empfangsspeicherregister 110 bzw. 111 erfolgt mit von der logischen Steuerschaltung 103 abgegebenen Relativadressensignalen und Schreibimpulsen.

Das jeweilige Summenregister der Addier-Subtrahiereinrichtung 108 bzw. 109 wird unmittelbar vor dem ersten Empfangszeitschlitz RTS eines Pulsrahmens durch einen von der logischen Steuerschaltung 103 abgegebenen Löschimpuls CP (Fig. 1) gelöscht, um die zum erneuten Aufsummieren konferenzrelevanter Signale des jeweiligen Pulsrahmens erforderliche Nullstellung zu gewährleisten.

Es ist ferner ein Hilfstaktgenerator 112 vorgesehen, der durch den Empfangszeitschlitz-Folgetakt RCL und durch das Empfangszeitschlitz-Synchronsignal RSY gesteuert wird und an seinem Ausgang ein Taktsignal mit der doppelten Frequenz des Zeitschlitz-Folgetakts von 2,048 MHz abgibt. Dieses Taktsignal steuert eine logische Adressierschaltung 113, die gemäss dem in Fig. 1 gezeigten Beispiel mit sieben Taktimpulsen Relativadressen erzeugt, die beispielsweise für sechs konferenzbeteiligte Anschlussstellen vorgesehen sind. Ferner steuert die logische Adressierschaltung 113 Leseimpulse für die Empfangsspeicherregister 110 und 111 sowie Schreibimpulse für Sendespeicherregister 114 und 115 für die Signalverarbeitung während des Abschnitts nicht konferenzrelevanter Signale. Zusätzlich gibt sie in noch zu beschreibender Weise die Relativadressen für die Speicherregister 110, 111, 114 und 115 während des Abschnitts konferenzrelevanter Signale ab. Die Register 110, 111, 114 und 115 sind Speicher mit wahlfreiem Zugriff (RAM).

Während eines von dem Hilfstaktgenerator 112 abgegebenen Taktimpulses wird das unter einer bestimmten Relativadresse im jeweiligen Empfangsspeicherregister 110 bzw. 111 zwischengespeicherte Signalwort an die Addier-Subtrahiereinrichtung 108 bzw. 109 ausgelesen und von der im jeweils zugeordneten Summenregister enthaltenen Signalsumme subtrahiert. Die auf diese Weise von eigenen Informationsgehalt befreite und somit teilnehmerspezifische Teilsumme wird unter Verwendung derselben Relativadresse in das jeweilige Sendespeicherregister 114 bzw. 115 des Verarbeitungskanals I bzw. II eingeschrieben.

Zu Beginn des nächstfolgenden Pulsrahmens können die in den Sendespeicherregistern 114 und 115 zwischengespeicherten Teilsummensignale unter Steuerung durch die logische Steuerschaltung 103 und Verwendung der bereits genannten Relativadressensignale ausgelesen und über einen für beide Verarbeitungskanäle I und II gemeinsam vorgesehenen Kompressor 116 einem Sendesynchronisierspeicherregister 117 zugeführt werden, während gleichzeitig wieder neue PCM-Signale von den konferenzbeteiligten Anschlussstellen empfangen werden. Der Kompressor 116 setzt die ihm zugeführten 12-stelligen Linearworte in nichtlineare achtstellige Signalworte um, die in dem Sendesynchronisierspeicherregister 117 mit dem Sendezeitschlitz-Folgetakt TCL synchronisiert werden und in Verbindung mit dem der jeweiligen Relativadresse zugeordneten und gesetzten Zeitschlitz über ein ODER-Glied 118 ausgelesen und über die Multiplexleitung 107 an die konferenzbeteiligten Anschlussstellen gesendet werden. Die Sendespeicherregister 114 und 115 werden vorteilhaft so gesteuert, dass sie die zwölfstelligen Signalworte mit einem Zeitvorlauf von 1/2 Zeitschlitz ausgeben, um die unvermeidliche Umsetzungszeit des Kompressors 116 zu kompensieren. Dieser Vorlauf ist in Fig. 1 als Kompressorvorlauf bezeichnet und dargestellt.

Ein asynchroner Lauf zwischen den Sendezeitschlitzen und den Empfangszeitschlitzen ist bis zu einem Zeitschlitzintervall zulässig, was bedeutet, dass der Sendezeitschlitz 000 im ungünstigsten Falle mit dem Empfangszeitschlitz 255 zusammenfallen darf, da die teilnehmerspezifische Teilsummenberechnung zeitlich nach der ersten Hälfte des Empfangszeitschlitzes 254 abgeschlossen ist und somit noch ein Vorlauf von 1/2 Zeitschlitz verfügbar ist, um ggf. den Sendezeitschlitz 000 setzen zu können.

Es ist zu erkennen, dass während des Abschnitts der Zeitschlitze 000 bis 250 des jeweils aktuellen Pulsrahmens die Empfangsspeicherregister 110 und 111 und die Sendespeicherregister 114 und 115 unabhängig voneinander empfangene PCM-Signale zwischenspeichern bzw. zu sendende PCM-Signale abgeben können.

Wenn eine Konferenzverbindung bei dem vorstehend beschriebenen Ausführungsbeispiel von fünf Zeitschlitzen für nicht konferenzrelevante Signale mit mehr Anschlussstellen durchgeführt werden soll als sie in diesem Abschnitt des Pulsrahmens durch Hilfstakte verarbeitet werden können, so kann von der Zentraleinheit programmgesteuert in dem einen Verarbeitungskanal eine Verarbeitung der PCM-Signale von beispielsweise sechs Anschlussstellen durchgeführt werden und zusätzlich ein sogenannter Blindzeitschlitz als Sendezeitschlitz gesetzt werden, dem ein Empfangszeitschlitz in dem anderen Verarbeitungskanal zugeordnet ist, in dem gleichfalls beispielsweise bis zu sechs Anschlussstellen bedient werden können. Der Blind-Empfangszeitschlitz des einen Verarbeitungskanals ist dann also Blind-Sendezeitschlitz im anderen Verarbeitungskanal und umgekehrt. Auf diese Weise werden zwei Teilkonferenzverbindungen geschaffen, deren Gesprächssummensignale ausgetauscht werden und somit in den beiden Summenregistern der Addier-Subtrahiereinrichtungen 108 und 109 jeweils zur gesamten Gesprächssignalsumme auflaufen. Die Teilsumme der jeweils anderen Teilkonferenzverbindung wird dadurch um einen Pulsrahmen, d.h. um 125 $\mu s$, verspätet aufgenommen, was im Hinblick auf die ausserordentlich schnelle Arbeitsweise der hier beschriebenen Steuerung aber ohne schädliche Auswirkungen bleibt.

Nach diesem Verfahren können beliebig viele Sprach- und/oder Tonsignale von Konferenzverbindungen gemischt werden, und es ist ein Aneinanderreihen zweier Konferenzverbindungen oder, bei mehr Verarbeitungskanälen, auch von mehr Konferenzverbindungen möglich.

Fig. 3 zeigt den prinzipiellen Aufbau der logischen Steuerschaltung 103 nach Fig. 1. Sie wird durch die von der Zentraleinheit CPU empfangenen Steuersignale gesteuert, zu denen der Empfangszeitschlitz-Folgetakt RCL, das Empfangszeitschlitz-Synchronsignal RSY, der Sendezeitschlitz-Folgetakt TCL und das Sendezeitschlitz-Synchronsignal TSY gehören. Die in Fig. 3 gezeigte Schaltungsanordnung ist in zwei gleichartig aufgebaute Abschnitte unterteilt, von denen der obere zur Ableitung der Steuersignale für den Empfangsvorgang und der untere zur Ableitung der Steuersignale für den Sendevorgang dient. Zunächst wird die Ableitung der Steuersignale für den Empfangsvorgang beschrieben.

Mit dem Empfangszeitschlitz-Folgetakt RCL und dem Empfangszeitschlitz-Synchronsignal RSY wird ein modulo-256-Adressenzähler 202 gesteuert, der den Empfangszeitschlitz-Folgetakt RCL abzählt und die Zeitschlitznummern als achtstellige Adressenworte an einen Multiplexer 203 abgibt, über den sie ein Adressregister 204 und ein Zeitschlitzregister 205 adressieren. In das Adressregister 204 werden in noch zu beschreibender Weise durch eine Schreib-Lesesteuerung 201 die dreistelligen Relativadressen der konferenzbeteiligten Anschlussstellen eingespeichert, und es hat hierzu eine der pro Verarbeitungskanal I bzw. II maximal möglichen Zahl konferenzbeteiligter Anschlussstellen entsprechende Kapazität. Seine Breite beträgt deshalb mindestens 3 Bit, und es ist in zwei Abschnitte I und II unterteilt, die

den Verarbeitungskanälen I und II zugeordnet sind. Diese Unterteilung ist erforderlich, da in den beiden Verarbeitungskanälen I und II bezüglich zu übertragender Hörtöne ein und derselbe Empfangszeitschlitz RTS gesetzt sein kann. Das Adressregister 204 gibt in Zuordnung zu bestimmten Empfangszeitschlitzen RTS dreistellige Relativadressensignale ab, die in noch zu beschreibender Weise zur Signalzwischenspeicherung zum jeweiligen Verarbeitungskanal I bzw. II weitergeleitet werden, wozu sie zunächst an eine Synchronisierschaltung 206 abgegeben werden, die durch den Empfangszeitschlitz-Folgetakt RCL gesteuert wird und als Zwischenspeicher aufgebaut sein kann.

Das Zeitschlitzregister 205 hat eine Breite von 4 Bit und ist in vier Abschnitte unterteilt, von denen jeweils zwei Abschnitte RTSA und RTSB dem Verarbeitungskanal I bzw. dem Verarbeitungskanal II zugeordnet sind. Das Zeitschlitzregister 205 wird als Umlaufregister betrieben und hierzu gleichfalls von der Schreib-Lesesteuerung 201 angesteuert.

Die Schreib-Lesesteuerung 201 wird von der Zentraleinheit CPU einerseits durch den Empfangszeitschlitz-Folgetakt RCL, andererseits durch Relativadressen und Empfangszeitschlitz-Setzbefehle über das Verteilregister 102 angesteuert. Achtstellige Empfangszeitschlitznummern gesetzter Empfangszeitschlitze werden dem Multiplexer 203 zugeführt, so dass dieser bei einem gesetzten Empfangszeitschlitz die beiden Register 204 und 205 durch Einblenden eines Adressensignals in den laufenden Adressenstrom aus dem Adresszähler 202 adressiert. Ferner gibt die Schreib-Lesesteuerung über eine Leitung WR Schreib-Leseimpulse an die beiden Register 204 und 205 ab. Ausserdem gibt sie die jeweils zu einem gesetzten Empfangszeitschlitz RTS gehörende dreistellige Relativadresse je nach Verarbeitungskanal an den Abschnitt I oder II des Adressregisters 204 ab, da dieses zum jeweils zugeordneten Zeitschlitz über den Multiplexer 203 adressiert wird. Weitere Ausgänge der Schreib-Lesesteuerung 201 dienen zur laufenden Einspeicherung in die vier Abschnitte des Zeitschlitzregisters 205. Im jeweiligen ersten Halbtakt des Zeitschlitz-Folgetaktes RCL werden die vier Abschnitte des Zeitschlitzregisters 205 durch die Schreib-Lesesteuerung 201 gelesen und im zweiten Halbtakt wieder eingeschrieben. Trifft während des Vorhandenseins des jeweils gelesenen Registerinhalts in der Schreib-Lesesteuerung 201 ein Setzbefehl für einen Empfangszeitschlitz RTS ein, so wird die jeweils gelesene Information entsprechend geändert und in dieser Form wieder in das Zeitschlitzregister 205 eingeschrieben. Beim Lesen werden die Informationen des Zeitschlitzregisters 205 ferner über ein ODER-Glied 208 bzw. 209 der Synchronisierschaltung 206 zugeführt.

Die Abschnitte RTSA und RTSB des jeweiligen Teils I bzw. II des Zeitschlitzregisters 205 sind also als Speicherspuren eines Umlaufspeichers aufzufassen, wobei in die eine Speicherspur, z.B. RTSA, nur Bits eingeschrieben werden, die angeben, dass ein Zeitschlitz nicht gesetzt ist. In die andere Spur, z.B. RTSB, werden nur Bits eingeschrieben, die unter der jeweils betreffenden Zeitschlitznummer als Registeradresse den gesetzten Zustand eines Zeitschlitzes angeben. Die Synchronisierschaltung 206 gibt diese Bits nach dem Lesen neben den Relativadresssignalen RADI und RADII als Schreib-Leseimpulse für die Empfangsspeicherregister 110 und 111 (Fig. 2) ab und steuert diese während des Abschnitts konferenzrelevanter PCM-Signale des jeweils aktuellen Pulsrahmens in bereits beschriebener Weise.

Der Aufbau des Zeitschlitzregisters 205 in Form für jeden Verarbeitungskanal I und II vorgesehener Speicherspuren RTSA und RTSB ist erforderlich, um nach dem Einschalten der hier beschriebenen Konferenz-Steuerschaltung innerhalb einer Pulsrahmenzeit ein in einer Spur eventuell vorhandenes Bitmuster zu löschen und diese Spur dann durch ein gegenüber dem Einschaltevorgang verzögertes Freigabesignal in Betrieb nehmen zu können. Ferner kann beim Auflösen einer Konferenzverbindung von der Zentraleinheit CPU ein Befehlssignal abgegeben werden, durch das die Löschung des jeweiligen Verarbeitungskanals angezeigt wird. Hierzu ist dann lediglich ein Wechsel der gerade als Arbeitsspeicher benutzten Speicherspur nötig. Auf diese Weise wird ein schneller Abbau der Konferenzverbindung gewährleistet, der andernfalls nur durch jeweiliges Löschen aller benutzten Zeitschlitze erfolgen könnte und damit sehr langsam ablaufen würde.

Ein Komparator 207 vergleicht die mit dem Adresszähler 202 gezählten Empfangszeitschlitznummern laufend mit einem voreingestellten Wert 250, so dass er bei Überschreiten dieses Wertes ein Löschsignal für die beiden Register 204 und 205 abgibt. Auf diese Weise wird verhindert, dass nach dem Zeitschlitz 250 noch Steuersignale an die Empfangsspeicherregister 110 und 111 (Fig. 2) ausgegeben werden.

Beginnend mit dem Empfangszeitschlitz 251 bis zum Empfangszeitschlitz 255 werden die Schreib-Leseimpulse sowie Relativadressensignale ausschliesslich von der bereits beschriebenen logischen Adressierschaltung 113 erzeugt und abgegeben.

Der untere Teil der in Fig. 3 gezeigten logischen Steuerschaltung arbeitet für den Sendebetrieb analog dem oberen Teil, jedoch liefert er die Relativadressensignale TADI und TADII sowie Schreib-Leseimpulse für die Sendespeicherregister 114 und 115 während des Abschnitts konferenzrelevanter Signale des jeweils aktuellen Pulsrahmens. Ein modulo-256-Adressenzähler 212 adressiert über einen Multiplexer 213 ein Adressregister 214 für die den Sendezeitschlitzen zugeordneten Relativadressen. Der Adressenzähler 212 wird durch den Sendezeitschlitz-Folgetakt TCL und das Sendezeitschlitz-Synchronsignal TSY von der Zentraleinheit CPU (Fig. 2) her gesteuert. Der Sendezeitschlitz-Folgetakt TCL steuert ferner eine Schreib-Lesesteuerung 211, die die zu speichernden Signale gleichfalls über das Verteilregister 102 von der Zentraleinheit CPU erhält. Die beiden Register 214 und 215 arbeiten analog der bereits für die Register 204 und 205 beschriebenen Weise, wobei das Zeitschlitzregister 215 mit seinen beiden Teilen I und II für die beiden Verarbeitungskanäle I und II und jeweils zwei Abschnitten TTSA und TTSB nach dem bereits erläuterten Umlaufprinzip arbeitet. Das Adressregister 214 ist im Gegensatz zum Adressregister 204 nicht in zwei Abschnitte entsprechend den Verarbeitungskanälen I und II unterteilt, da in einem jeweiligen Sendezeitschlitz logischerweise nur ein Verarbeitungskanal im Sendebetrieb arbeiten kann. Die in den Registern 214 und 215 enthaltenen Informationen werden bei einem gesetzten zugeordneten Sendezeitschlitz TTS als dreistellige Relativadresssignale über ODER-Glied 218 und 219 an eine Synchronisierschaltung 216 ausgegeben, die die bereits beschriebenen Steuersignale für die Sendespeicherregister 114 und 115 liefert und durch den Sendezeitschlitz-Folgetakt TCL gesteuert wird.

Ein Komparator 217 ist auf die Sendezeitschlitznummer 245 voreingestellt und gibt bei ihrem Überschreiten während des mit dem Adresszähler 212 durchgeführten Adressiervorgangs ein Löschsignal für die beiden Register 214 und 215 ab, so dass diese nur für die Zeitschlitze 000 bis 245 die beschriebenen Steuersignale abgeben können, da nur während dieses Abschnitts des jeweils aktuellen Pulsrahmens ein Setzen von Sendezeitschlitzen TTS in der zentralen Konferenz-Steuerschaltung in Betracht kommt.

In Fig. 3 ist ferner ein ODER-Glied 210 dargestellt, das mit den Ausgangssignalen der ODER-Glieder 208, 209, 218 und 219 sowie mit einem Signal des Verteilregisters 102 angesteuert wird. Das Ausgangssignal dieses ODER-Glieds 210 dient dazu, automatisch eine teilweise Abschaltung der Konferenz-Steuerschaltung vorzunehmen, wenn diese nicht genutzt wird. Auf diese Weise ist es möglich, die Konferenz-Steuerschaltung in hier nicht dargestellter Weise in einem Bereitzustand zu halten, in dem der Leistungsverbrauch wesentlich reduziert ist.

Das ODER-Glied 210 registriert, gesteuert durch ein geeignetes Ausgangssignal des Verteilregisters 102, am Ende eines jeden Pulsrahmens einen eventuell in einem der Zeitschlitzregister 205 und 215 noch gespeicherten Empfangs- bzw. Sendezeitschlitz. Zusätzlich wird anhand eines charakteristischen Bits im Verteilregister 102 geprüft, ob der jeweils letzte von der Zentraleinheit CPU empfangene Befehl ein Setzbefehl für einen Zeitschlitz war. Ist keine dieser Bedingungen erfüllt, so bewirkt das Ausgangssignal des ODER-Gliedes 210 in hier nicht näher dargestellter Weise eine Abschaltung der Betriebsspannung für einzelne Funktionsgruppen der zentralen Konferenz-Steuerschaltung. Solche Funktionsgruppen können beispielsweise die Addier-Subtrahiereinrichtung 108 bzw. 109 mit zugehörigem Summenregister, die Empfangsspeicherregister 110, 111, die Sendespeicherregister 114, 115, die Expander 104, 105, der Kompressor 116, der Hilfstaktgenerator 112 und die logische Adressierschaltung 113 sein. Gleichzeitig können die Register 204, 205, 214 und 215 bei Vorliegen der vorstehend genannten Bedingung in eine Betriebsart geschaltet werden, bei der unter verringerter Leistungsaufnahme die interne Speicherhaltung aufrechterhalten wird.

Wenn dann von der Zentraleinheit CPU ein neuer Setzbefehl für einen Zeitschlitz in das Verteilregister 102 eingegeben wird, so können die Register 204, 205, 214 und 215 so schnell aktiviert werden, dass sie noch mit dem aktivierenden Betriebstakt in dem bereits erläuterten Umlaufbetrieb gelesen bzw. geschrieben werden können.

Die Betriebsbereitschaft der abgeschalteten Funktionsgruppen kann innerhalb einer Zeit von ca. 1 bis 2 $\mu$s wieder hergestellt werden.

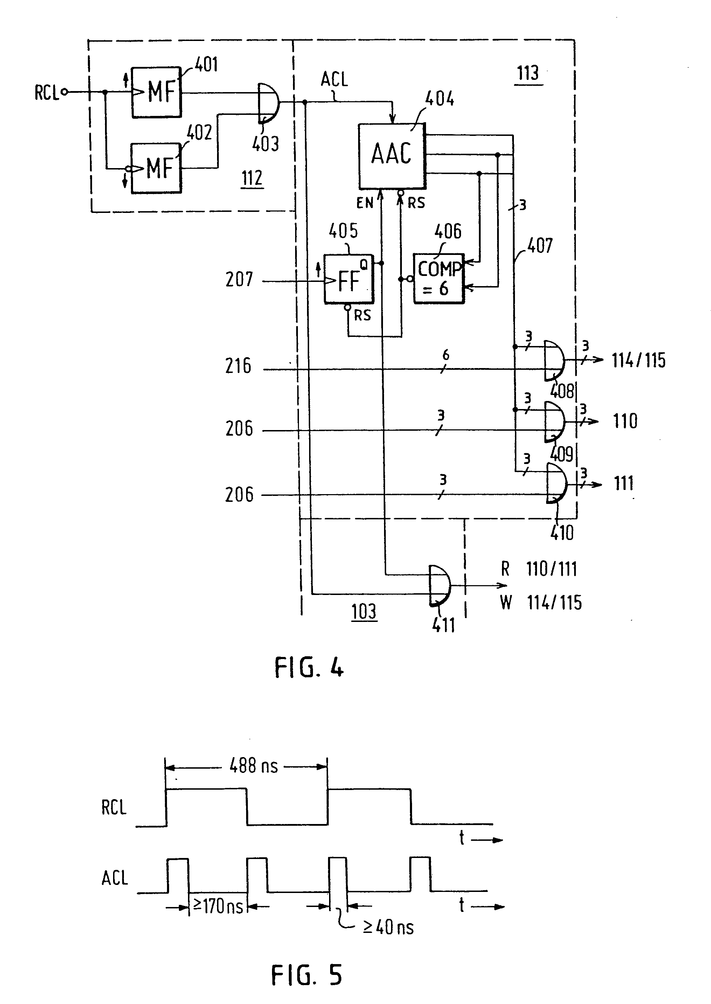

In Fig. 4 ist eine mögliche Ausführungsform der logischen Adressierschaltung 113 (Fig. 2) in Verbindung mit dem Hilfstaktgenerator 112 dargestellt. Die beiden Funktionseinheiten sind jeweils von einer gestrichelten Linie umgeben, und ausserdem ist angedeutet, dass die logische Adressierschaltung auch einen Teil der logischen Steuerschaltung 103 in noch zu beschreibender Weise steuert.

Der Hilfstaktgenerator 112 enthält zwei flankengesteuerte monostabile Schaltungen 401 und 402 sowie ein ODER-Glied 403. Die beiden monostabilen Schaltungen 401 und 402 arbeiten mit übereinstimmender Zeitkonstante und werden jeweils durch den Empfangszeitschlitz-Folgetakt angesteuert. Die monostabile Schaltung 401 spricht auf positive Flanken des Empfangszeitschlitz-Folgetaktes, die monostabile Schaltung 402 durch ihren invertierenden Eingang auf negative Flanken des Empfangszeitschlitz-Folgetaktes an. Auf diese Weise entstehen an den Ausgängen der beiden monostabilen Schaltungen 401 und 402 Impulse übereinstimmender Länge, die durch Zusammenfassung in dem ODER-Glied 403 an dessen Ausgang ein Hilfstaktsignal ACL bilden, welches die doppelte Frequenz des Empfangszeitschlitz-Folgetaktes RCL hat.

Das Hilfstaktsignal ACL wird innerhalb der logischen Adressierschaltung 113 einem Hilfsadressenzähler 404 zugeführt, der an drei Ausgängen synchron mit dem Hilfstaktsignal ACL Relativadressensignale 0 bis 6 abgibt. Der Hilfsadressenzähler 404 hat einen Taktfreigabeeingang EN sowie einen invertierenden Rücksetzeingang RS. Ein Komparator 406 gibt an den Rücksetzeingang RS ein Signal ab, wenn das Relativadressensignal 6 erreicht ist. Synchron mit dem nächstfolgenden Hilfstaktimpuls wird der Hilfsadressenzähler 404 dann rückgesetzt. Das Ausgangssignal des Komparators 406 wird ferner einer bistabilen Schaltung 405 zugeführt. Diese ist flankengesteuert und wird an ihrem Takteingang durch das Ausgangssignal des Komparators 207 (Fig. 3) angesteuert, welches dann auftritt, wenn der Abschnitt nicht konferenzrelevanter Signale des jeweiligen Pulsrahmens beginnt. Die bistabile Schaltung 405 wird durch dieses Signal so betätigt, dass ihr Q-Ausgangssignal am Taktfreigabeeingang EN den Hilfsadressenzähler 404 für den jeweiligen Zählvorgang freigibt. Bei Erreichen des Relativadressensignals 6 wird die bistabile Schaltung 405 durch das Ausgangssignal des Komparators 406 an ihrem Rücksetzeingang RS wieder zurückgesetzt. Dieser Vorgang ergibt sich durch die beiden Negationen am Ausgang des Komparators 406 bzw. am Rücksetzeingang RS der bistabilen Schaltung 405.

Die Relativadressensignale, die der Hilfsadressenzähler 404 abgibt, werden über eine Dreifachleitung 407 parallel drei ODER-Gliedern 408, 409, 410 zugeführt, die an ihren Ausgängen dann die Relativadressen für die Empfangsspeicherregister 110 und 111 sowie für die Sendespeicherregister 114 und 115 abgeben. Es handelt sich dabei um die Relativadressen für den Abschnitt nicht konferenzrelevater Signale des jeweiligen Pulsrahmens. In gleicher Weise geben die drei ODER-Glieder 408, 409 und 410 aber auch die Relativadressen für die genannten Empfangs- bzw. Sendespeicherregister während des Abschnitts konferenzrelevanter Signale des jeweiligen Pulsrahmens ab, denn es werden ihnen an ihren zweiten Eingängen die Relativadressensignale der Synchronisierschaltungen 206 und 216 (Fig. 3) zugeführt.

Die logische Adressierschaltung 113 gibt also einerseits Relativadressen ab, die in den Zeitraum fallen, in dem die Synchronisierschaltungen 206 und 216 nur das Relativadressensignal 0 abgeben, da sie infolge der Ausgangssignale der Komparatoren 207 und 217 während des Abschnitts nicht konferenzlevanter Signale keine Relativadressensignale von den Adressregistern 204 und 214 erhalten. Während des Abschnitts konferenzrelevanter Signale gibt die logische Adressierschaltung 113 andererseits die Relativadressen ab, die den von den Synchronisierschaltungen 206 und 216 empfangenen Relativadressensignalen entsprechen. Auf diese Weise liefern die ODER-Glieder 408, 409 und 410 die Relativadressen, die während des gesamten jeweiligen Pulsrahmens für die in Fig. 2 gezeigte Konferenz-Steuerschaltung erforderlich sind.

Fig. 4 zeigt ferner ein UND-Glied 411, das zu der logischen Steuerschaltung 103 gehört. Dieses UND-Glied 411 gibt während des Abschnitts nicht konferenzrelevanter Signale des jeweiligen Pulsrahmens die Leseimpulse für die Empfangsspeicherregister 110 und 111 und die Schreibimpulse für die Sendespeicherregister 114 und 115 ab. Dies erfolgt mittels Steuerung durch das Q-Ausgangssignal der bistabilen Schaltung 405, welches während des Abschnittes nicht konferenzrelevanter Signale ein Oben-Signal ist. Dieses Signal schaltet an dem UND-Glied 411 die Hilfstaktimpulse ACL wirksam, so dass sie am Ausgang des UND-Gliedes 411 als Lese- bzw. Schreibimpulse während des Abschnittes nicht konferenzrelevanter Signale für die in Fig. 2 gezeigte Konferenz-Steuerschaltung nutzbar sind.

In Fig. 5 ist der Empfangszeitschlitz-Folgetakt RCL in zeitlicher Zuordnung zu dem Hilfstaktsignal ACL dargestellt. Hier ist zu erkennen, dass die Zeitkonstante der beiden monostabilen Schaltungen 401 und 402 (Fig. 4) so bemessen sein muss, dass sich bei einer Zeitschlitz-Taktperiode von 488 ns eine Pulsdauer der Hilfstaktimpulse von circa 40 ns ergibt. Diese Pulsdauer reicht aus, um den Hilfsadressenzähler 404 (Fig. 4) weiterzuschalten und in den Impulspausen von circa 170 ns Länge die Schreib- und Leseimpulse für die Empfangs- bzw. Sendespeicherregister der in Fig. 2 gezeigten Konferenz-Steuerschaltung abzuleiten. Während der Impulspausen des Hilfstaktsignals ACL erfolgt für jeweils eine Relativadresse das Auslesen von PCM-Signalwörtern aus den Empfangsspeicherregistern 110 und 111, die Teilsummenbildung in den Addier-Subtrahiereinrichtungen 108 und 109 sowie das anschliessende Einschreiben der berechneten Teilsummen in die Sendespeicherregister 114 und 115. Das Hilfstaktsignal ACL wird im Hinblick auf die Zykluszeiten der Speicherregister und auf die Rechenzeit der Addier-Subtrahiereinrichtungen zeitlich optimiert.

**Patentansprüche**

1. Verfahren zur Steuerung der Übertragung von PCM-Signalen zwischen Anschlussstellen eines PCM-Zeitmultiplex-Fernmeldenetzes in einem Konferenzbetrieb mittels einer zentralen Konferenz-Steuerschaltung, bei dem jeder in eine Verbindung einbezogenen Anschlussstelle ein Sendepuls mit zyklisch wiederholt in aufeinander folgenden Pulsrahmen auftretenden Sendezeitschlitzen und ein Empfangspuls mit zyklisch wiederholt in aufeinander folgenden Pulsrahmen auftretenden Empfangszeitschlitzen durch eine Zentraleinheit zugeteilt ist, bei dem in einem Pulsrahmen von den konferenzbeteiligten Anschlussstellen abgegebene und in der zentralen Konferenz-Steuerschaltung empfangene PCM-Signale unter ggf. erforderlicher Linearisierung unmittelbar bei ihrem Empfang algebraisch summiert, zwischengespeichert und zur Übertragung an die jeweilige konferenzbeteiligte Anschlussstelle jeweils unter Aussonderung der von dieser Anschlussstelle abgegebenen PCM-Signale einer Teilsummenbildung unterzogen werden, bei dem den Teilsummen entsprechende PCM-Signale ggf. nach Delinearisierung während eines weiteren Pulsrahmens zu den konferenzbeteiligten Anschlussstellen gesendet werden, und bei dem Zeitschlitze innerhalb eines vorbestimmten Abschnitts des jeweiligen Pulsrahmens für die Übertragung nicht konferenzrelevanter Signale vorgesehen sind, dadurch gekennzeichnet, dass die empfangenen und algebraisch summierten PCM-Signale anschlussstellenspezifisch höchstens bis zum Ablauf des am Ende des jeweils aktuellen Pulsrahmens liegenden Abschnitts nicht konferenzrelevanter Signale zwischengespeichert werden, dass die teilnehmerspezifische Teilsummenbildung und eine Zwischenspeicherung dieser Teilsummen in diesem Abschnitt erfolgt und dass den Teilsummen entsprechende PCM-Signale unmittelbar nach diesem Abschnitt mit Beginn des auf den aktuellen Pulsrahmen unmittelbar folgenden Pulsrahmens zu den konferenzbeteiligten Anschlussstellen gesendet werden.

2. Verfahren nach Anspruch 1, dadurch gekennzeichnet, dass den konferenzbeteiligten Anschlussstellen durch die Zentraleinheit zugeordnete Relativadressen auch zur Zwischenspeicherung der empfangenen PCM-Signale und der Zwischensummen sowie zum Senden der Zwischensummen verwendet werden.

3. Verfahren nach Anspruch 1 oder 2, dadurch gekennzeichnet, dass die Teilsummenbildung sowie deren Zwischenspeicherung durch Hilfstaktsignale gesteuert wird, deren Frequenz vorzugsweise den doppelten Wert des Zeitschlitz-Folgetaktes hat.

4. Verfahren nach Anspruch 3, dadurch gekennzeichnet, dass die Hilfstaktsignale auch die Erzeugung von Relativadressensignalen und von Schreib-Leseimpulsen für die Zwischenspeicherung der Teilsummen steuern.

5. Verfahren nach einem der Ansprüche 1 bis 4, dadurch gekennzeichnet, dass die Teilsummen durch hilfstaktgesteuerte Subtraktion der bis zum Beginn des genannten Abschnitts zwischengespeicherten einzelnen PCM-Signale von der Signalsumme erzeugt werden.

6. Verfahren nach einem der vorhergehenden Ansprüche, dadurch gekennzeichnet, dass Schreib-Leseimpulse und Relativadressensignale zur Ansteuerung von Zwischenspeichern für den Empfangs- und den Sendevorgang getrennt während des Abschnitts konferenzrelevanter Signale eines Pulsrahmens erzeugt werden.

7. Verfahren nach Anspruch 6, dadurch gekennzeichnet, dass beim Empfang und beim Senden jeweils gesteuert durch den Empfangs- bzw. Sendezeitschlitz-Folgetakt eine modulo-n-Adressenzählung für ein Relativadressregister und für ein Empfangs- bzw. Sendezeitschlitzregister erfolgt, deren Schreib-Lese-Steuerung entsprechend der Zuordnung der Relativadressen zu bestimmten Empfangs- bzw. Sendezeitschlitzen aktiviert wird, wobei n die Zahl der Zeitschlitze pro Pulsrahmen ist.

8. Verfahren nach Anspruch 7, dadurch gekennzeichnet, dass die jeweilige Schreib-Lesesteuerung zyklisch mit der Adressenzählung im ersten Halbtakt eines Empfangs- bzw. Sendezeitschlitz-Folgetaktsignals ein Lesen des Empfangs- bzw. Sendezeitschlitzregisters und im zweiten Halbtakt ein Schreiben des gelesenen Inhalts ggf. nach Änderung durch einen von der Zentraleinheit abgegebenen Zeitschlitz-Setzbefehl in Verbindung mit einer zugeordneten Relativadresse bewirkt, die gleichzeitig in das Relativadressregister eingeschrieben wird, und dass die Schreib-Lesesteuerung bei Auftreten eines gesetzten Empfangs- bzw. Sendezeitschlitzes im Zuge des zyklischen Lese-Schreibvorgangs ein Lesen des Inhalts des jeweiligen Relativadressregisters und Zeitschlitzregisters und eine Weiterleitung der gelesenen Signale als Relativadresssignale und Schreibimpulse für die Zwischenspeicherung der empfangenen PCM-Signale bzw. eine Weiterleitung der gelesenen Signale als Relativadressensignale und Leseimpulse für das Senden der Zwischensummen an die konferenzbeteiligten Anschlussstellen veranlasst.

9. Verfahren nach einem der vorhergehenden Ansprüche, dadurch gekennzeichnet, dass über mehrere zueinander parallele Verarbeitungskanäle zwischen Empfänger und Sender der zentralen Konferenz-Steuerschaltung gleichzeitig mehrere Konferenzverbindungen abgewickelt werden, indem die Teilsummen der Teilkonferenzen der einzelnen Verarbeitungskanäle untereinander ausgetauscht werden und in dem jeweiligen Summenspeicher eines Verarbeitungskanals zur gesamten Gesprächssignalsumme auflaufen, wozu einem Zeitschlitz des Abschnitts nicht konferenzrelevanter Signale ein den Austausch der Teilsummen ermöglichendes Kriterium in den Verarbeitungskanälen zugeordnet wird.

10. Schaltungsanordnung zur Durchführung des Verfahrens nach einem der Ansprüche 1 bis 9, mit einem über einen Empfänger (106) bzw. einen Sender (117) an die Multiplexleitung (107) des PCM-Zeitmultiplex-Fernmeldenetzes angeschlossenen Verarbeitungskreis für die von den konferenzbeteiligten Anschlussstellen empfangenen PCM-Signale, der ggf. eine Expanderschaltung (104; 105) zur Linearisierung der empfangenen PCM-Signale, eine Addier-Subtrahiereinrichtung mit zugeordnetem Summenregister (108; 109), ggf. eine Kompressorschaltung (116) zur Delinearisierung der zu sendenden PCM-Signale sowie Zwischenspeicher enthält und dessen Funktion durch Steuersignale (TTS, RTS, CP) und Relativadressensignale (TAD, RAD) gesteuert wird, die über logische Steuerschaltungen (102; 103; 112; 113) aus von der Zentraleinheit (CPU) empfangenen Zeitschlitz-Setzbefehlen, Zeitschlitz-Folgetaktsignalen (RCL, TCL), Zeitschlitz-Synchronisationssignalen (RSY, TSY) und Relativadressen abgeleitet werden, dadurch gekennzeichnet, dass der Verarbeitungskreis zwischen Empfänger (106) und Sender (117) mindestens einen Verarbeitungskanal aufweist, der parallel zueinander ein Empfangsspeicherregister (110, 111) und eine Addier-Subtrahiereinrichtung (108, 109) mit Summenregister, deren Subtrahierteil mit dem Ausgang des Empfangsspeicherregisters (110, 111) verbunden ist, sowie ein dieser Parallelanordnung nachgeordnetes Sendespeicherregister (114, 115) enthält.

11. Schaltungsanordnung nach Anspruch 10, dadurch gekennzeichnet, dass mehrere zueinander parallele Verarbeitungskanäle (I, II) zwischen Empfänger (106) und Sender (117) vorgesehen sind, deren Steuersignale und Relativadressensignale über ihnen gemeinsame logische Steuerschaltungen (102, 103, 112, 113) abgeleitet werden.

12. Schaltungsanordnung nach Anspruch 10 oder 11, dadurch gekennzeichnet, dass eine erste logische Steuerschaltung (103) zur Erzeugung von Steuersignalen und eine zweite logische Steuerschaltung (113) zur Erzeugung von Relativadressensignalen und zur Steuerung der gemeinsamen Abgabe von Steuersignalen und der Relativadressensignale im jeweiligen Pulsrahmen vorgesehen sind.

13. Schaltungsanordnung nach Anspruch 12, dadurch gekennzeichnet, dass die erste logische Steuerschaltung (103) durch den Zeitschlitz-Folgetakt gesteuert ist, während die zweite logische Steuerschaltung (113) durch das Taktsignal eines Hilfstaktgenerators (112) gesteuert ist, das die doppelte Frequenz des Zeitschlitz-Folgetaktes hat.

14. Schaltungsanordnung nach Anspruch 12 oder 13, dadurch gekennzeichnet, dass die erste logische Steuerschaltung (103) zwei getrennt arbeitende Abschnitte zur Abgabe von Steuersignalen und Relativadressensignalen aufweist, von denen der eine das bzw. die Empfangsspeicherregister (110, 111) und der andere das bzw. die Sendespeicherregister (114, 115) ansteuert.

15. Schaltungsanordnung nach Anspruch 14, dadurch gekennzeichnet, dass die beiden Abschnitte der ersten logischen Steuerschaltung (103) gleichartig aufgebaut sind und jeweils einen durch den Empfangs- bzw. den Sendezeitschlitz-Folgetakt (RCL, TCL) gesteuerten, die Zeitschlitze n eines Pulsrahmens abzählenden modulo-n-Zähler (202, 212) enthalten, dessen Ausgangssignale als Adressiersignale einem Relativadressregister (204, 214) und einem Zeitschlitzregister (205, 215) zur Speicherung gesetzter Zeitschlitze eines Pulsrahmens über einen Multiplexer (203) zugeführt sind, der durch Zeitschlitz-Setzsignale einer durch die Zentraleinheit (CPU) mit Zeitschlitz-Setzbefehlen und mit Relativadressen angesteuerten Schreib-Lesesteuerung (201, 211) zum Setzen eines Zeitschlitzes in dem Zeitschlitzregister (205, 215) und zur gleichzeitigen Einspeicherung der zugehörigen Relativadressen in das Relativadressregister (204, 214) durchschaltbar ist, dass die Schreib-Lesesteuerung (201, 211) ein zyklisches Ein- und Ausspeichern des Zeitschlitzregisters (205, 215) ggf. unter Änderung der jeweils gelesenen Information in jeweils zwei Halbschritten pro Zeitschlitz-Folgetaktintervall vornimmt und dass dem Relativadressregister (204, 214) und dem Zeitschlitzregister (205, 215) eine Synchronisationsschaltung (206, 216) nachgeschaltet ist, über die, getaktet mit dem jeweiligen Empfangs- bzw. Sendezeitschlitz-Folgetakt (RCL, TCL), der jeweilige Inhalt des Relativadressregisters (204, 214) mit einem zugehörigen Zeitschlitz-Setzsignal aus dem Zeitschlitzregister (205, 215) dem oder den Empfangsspeicherregistern (110, 111) bzw. dem oder den Sendespeicherregistern (114, 115) zugeführt wird.

16. Schaltungsanordnung nach einem der Ansprüche 12 bis 15, dadurch gekennzeichnet, dass die zweite logische Steuerschaltung (113) als Adressierschaltung einen durch Hilfstaktimpulse (ACL) gesteuerten Hilfsadressenzähler (404) enthält, dessen Zählvolumen der Zahl konferenzberechtigter Anschlussstellen entspricht.

17. Schaltungsanordnung nach Anspruch 16, dadurch gekennzeichnet, dass der Hilfsadressenzähler (404) an einem Freigabeeingang (EN) durch ein bei Beginn des Abschnitts nicht konferenzrelevanter Signale von der ersten logischen Steuerschaltung (103) abgegebenes Signal gestartet und nach Abzählen der Zahl konferenzberechtigter Anschlussstellen zurückgesetzt wird.

18. Schaltungsanordnung nach Anspruch 16 oder 17, dadurch gekennzeichnet, dass die Ausgangssignale des Hilfsadressenzählers (404) als Relativadressensignale parallel auf mehrere ODER-Glieder (408, 409, 410) geführt sind, die ferner durch die Ausgangssignale der Synchronisationsschaltungen (206, 216) der ersten logischen Steuerschaltung (103) angesteuert sind und deren Ausgänge Relativadressen an die Empfangsspeicherregister (110, 111) und die Sendespeicherregister (114, 115) abgeben.

19. Schaltungsanordnung nach Anspruch 17 oder 18, dadurch gekennzeichnet, dass dem Hilfsadressenzähler (404) ein Komparator (406) und eine bistabile Schaltung (405) zugeordnet sind, dass der Komparator die Ausgangssignale des Hilfsadressenzählers (404) mit einem vorgegebenen Wert entsprechend der Zahl konferenzberechtigter Anschlussstellen vergleicht und bei Erreichen dieses Wertes ein Rücksetzsignal für den Hilfsadressenzähler (404) und für die bistabile Schaltung (405) abgibt und dass die bistabile Schaltung (405) durch das von der ersten logischen Steuerschaltung (103) abgegebene Signal umschaltbar ist und an ihrem Ausgang das Freigabesignal für den Hilfsadressenzähler (404) abgibt.

20. Schaltungsanordnung nach Anspruch 19, dadurch gekennzeichnet, dass die erste logische Steuerschaltung (103) ein durch die Hilfstaktimpulse (ACL) angesteuertes UND-Glied (411) enthält, das ferner durch das Freigabesignal für den Hilfsadressenzähler (404) angesteuert ist.

## Claims

1. Method for controlling the transmission of PCM-signals between connection points of a PCM time multiplex telecommunication system in a conference operation by means of a central conference control circuit, in which each connection point included in a connection has assigned to it by a central unit a transmission pulse with cyclically repeated transmission time slots occurring in successive pulse frames and a receiving pulse with cyclically repeated receiving time slots occurring in successive pulse frames, wherein PCM-signals emitted in one pulse frame from the conference-participating connection points and received in the central conference control circuit, with optionally necessary linearization, are algebraically summed immediately upon their being received, stored temporarily and for transmission to the respective conference-participating connection point are subjected to a partial summation, in each case with separation of the PCM-signals emitted by this connection point, wherein PCM-signals corresponding to the partial sums, optionally after delinearization, are transmitted during a further pulse frame to the conference-participating connection points, and wherein time slots are provided within a predetermined section of the respective pulse frame for the transmission of signals which are non conference-relevant, characterised in that the received and algebraically summed PCM-signals are temporarily stored connection-point-specifically at most until the elapse of the section of non-conference-relevant signals situated at the end of the respective current pulse frame, in that the subscriber-specific partial summation and a temporary storing of these partial sums takes place in this section, and in that PCM-signals corresponding to the partial sums are transmitted to the conference-participating connection points immediately after this section at the beginning of the pulse frame immediately following the current pulse frame.

2. Method according to claim 1, characterised in that relative addresses assigned to the conference-participating connection points by the central unit are also used for the temporary storing of the received PCM-signals and of the intermediate sums, as well as for transmission of the intermediate sums.

3. Method according to claim 1 or 2, characterised in that the partial summation as well as its temporary storage is controlled by auxiliary timing signals, the frequency of which is preferably twice the value of the time-slot sequence timing.

4. Method according to claim 3, characterised in that the auxiliary timing signals also control the generation of relative address signals and of write-read pulses for the temporary storage of the partial sums.

5. Method according to one of the claims 1 to 4, characterised in that the partial sums are produced by subtraction, controlled by auxiliary timing, of the individual PCM-signals temporarily stored up to the beginning of the mentioned section from the signal sum.

6. Method according to one of the preceding claims, characterised in that write-read pulses and relative-address signals for the controlling of temporary storage for the receiving and transmitting operation are generated separately during the section of conference-relevant signals of one pulse frame.

7. Method according to claim 6, characterised in that during receiving and during transmission, respectively controlled by the receiving and transmission time slot sequence timing a modulo-$n$-address counting takes place for a relative address register and for a respective receiving and transmission time slot register, the write-read control of which is activated in accordance with the assignment of the relative addresses to specific respective receiving and transmission time slots wherein $\underline{n}$ is the number of time slots per pulse frame.

8. Method according to claim 7, characterised in that the respective write-read control effects cyclically with the address counting, in the first half cycle of a receiving and transmission time slot sequence timing signal, a reading of the receiving and transmission time slot register respectively and, in the second half cycle, a writing of the content read, optionally after alteration by a time slot setting instruction emitted by the central unit, in conjunction with an assigned relative address which is written simultaneously into the relative address register, and in that, with the occurrence of a respective set receiving or transmission time slot in the course of the cyclical read-write operation, the write-read control induces a reading of the content of the respective relative address register and time slot register and a forwarding of the signals read, as relative-address signals and writting pulses for the temporary storage of the received PCM-signals and a forwarding respectively of the signals read, as relative-address signals and reading pulses for the transmission of the intermediate sums to the conference-participating connection points.

9. Method according to one of the preceding claims, characterised in that, $\underline{via}$ a plurality of mutually parallel processing channels between receiver and transmitter of the central conference-control circuit, simultaneously a plurality of conference connections are developed by the partial sums of the partial conferences of the individual processing channels being inter-changed for one another and accumulated in the respective sum store of one processing channel for the total conversation signal sum, for which purpose a criterion making possible the interchange of the partial sums is assigned in the processing channels to a time slot of the section of non-conference-relevant signals.

10. Circuit arrangement for carrying out the method according to one of claims 1 to 9, with a processing circuit for the PCM-signals received from the conference-participating connection points, connected $\underline{via}$ a receiver (106) and $\underline{via}$ a transmitter (117) respectively to the multiplex line of the PCM time multiplex telecommunication system, which processing circuit comprises optionally an expander circuit (104; 105) for the linearization of the received PCM-signals, an adding-subtracting device with associated summation register (108; 109), optionally a compressor circuit (116) for the delinearization of the PCM-signals to be transmitted, as well as temporary storage, and whose operation is controlled by control signals (TTS, RTS, CP) and by relative-address signals (TAD, RAD) which are derived via logic control circuits (102; 103; 112; 113) from time slot-setting instructions, time slot-sequence timing signals (RCL, TCL), time slot-synchronisation signals (RSY, TSY) and relative addresses received from the central unit (CPU), characterised in that between the receiver (106) and transmitter (117) the processing circuit has at least one processing channel, which comprises in parallel with one another a receiving store register (110, 111) and an adding-subtracting device (108, 109) with summation register, the subtracting part of which is connected with the output of the receiving store register (110, 111), as well as a transmitting store register (114, 115) arranged downstream of this parallel arrangement.

11. Circuit arrangement according to claim 10, characterised in that a plurality of mutually parallel processing channels (I, II) are provided between receiver (106) and transmitter (117), the control signals and relative-address signals of which are derived via their common logic control circuits (102, 103, 112, 113).

12. Circuit arrangement according to claim 10 or 11, characterised in that a first logic control circuit (103) for the generation of control signals and a second logic control circuit (113) for the generation of relative-address signals and for the control of the common outputting of control signals and of the relative-address signals in the respective pulse frame are provided.

13. Circuit arrangement according to claim 12, characterised in that the first logic control circuit (103) is controlled by the time-slot sequence timing, whereas the second logic control circuit (113) is controlled by the timing signal of an auxiliary pulse generator (112) which has twice the frequency of the time slot-sequence timing.

14. Circuit arrangement according to claim 12 or 13, characterised in that the first logic control circuit (103) has two separately operating sections for the outputting of control signals and relative-address signals, from which the one respectively controls the receiving store register or registers (110, 111) and the other respectively controls the transmitting store register (114, 115) or registers.

15. Circuit arrangement according to claim 14, characterised in that the two sections of the first logic control circuit (103) are of uniform construction and respectively comprise a modulo-n-counter (202, 212) counting the time slots n of one pulse frame and controlled respectively by the receiving or the transmission time slot-sequence timing (RCL, TCL), the output signals of which are fed, as addressing signals to a relative-address register (204, 214) and to a time-slot register (205, 215) for storing set time slots of one pulse frame, via a multiplexer (203) which can be connected through by time slot-setting signals of a write-read control (201, 211), controlled by the central unit (CPU) with time slot-setting instructions and with relative addresses, for setting a time slot in the time-slot register (205, 215) and for the simultaneous entering of the assigned relative address in the relative-address register (204, 214), in that the write-read control (201, 211) effects a cyclical writing and reading of the time-slot register (205, 215), optionally with alteration of the respectively read information in each case in two half steps per time slot-sequence interval, and in that a synchronizing circuit (206, 216) is connected downstream of the relative-address register (204, 214) and of the time-slot register (205, 215), via which synchronizing circuit, in timed sequence with the respective receiving and transmission time slot-sequence timing (RCL, TCL), the respective content of the relative address register (204, 214) with an associated time-slot-setting signal from the time-slot register (205, 215) is fed to the receiving store register or registers (110, 111) and to the transmitting store register or registers (114, 115).

16. Circuit arrangement according to one of claims 12 to 15, characterised in that the second logic control circuit (113) comprises as addressing circuit an auxiliary address counter (404) controlled by auxiliary clock pulses (ACL), the count volume of which counter corresponds to the number of conference-authorised connection points.

17. Circuit arrangement according to claim 16, characterised in that the auxiliary address counter (404) is started by a signal, applied to a enable input (EN), at the beginning of the section of non-conference-relevant signals from the first logic control circuit (103) and is reset after counting off the number of conference-authorised connection points.

18. Circuit arrangement according to claim 16 or 17, characterised in that the output signals of the auxiliary address counter (404) are directed as relative-address signals in parallel to a plurality of OR gates (408, 409, 410), which are further controlled by the output signals of the synchronizing circuits (206, 216) of the first logic control circuit, and whose outputs emit relative addresses to the receiving store registers (110, 111) and to the transmission store registers (114, 115).

19. Circuit arrangement according to claim 17 or 18, characterised in that a comparator (406) and a bistable circuit (405) are associated with the auxiliary address counter (404), in that the comparator compares the output signals of the auxiliary address counter (404) with a predetermined value corresponding to the number of conference-authorised connection points and upon attaining this value emits a resetting signal for the auxiliary address counter (404) and for the bistable circuit (405), and in that the bistable circuit (405) can be switched over by the signal emitted from the first logic control circuit (103) and at its output it emits the enable signal for the auxiliary address counter (404).

20. Circuit arrangement according to claim 19, characterised in that the first logic control circuit (103) includes an AND gate (411) controlled by the auxiliary clock pulses (ACL), which AND gate is further controlled by the enable signal for the auxiliary address counter (404).

Revendications

1. Procédé pour commander la transmission de signaux à modulation par impulsions et codage (M.I.C.) entre des points de connexion d'un réseau de télécommunications à multiplexage temporel M.I.C. dans un mode de conférence au moyen d'un circuit de commande central pour conférence, procédé dans lequel à chaque point de connexion participant à une liaison sont attribuées par une unité centrale une impulsion d'émission avec des intervalles de temps d'émission se produisant de manière cycliquement répétée dans des trames d'impulsions successives et une impulsion de réception avec des intervalles de temps de réception se produisant de manière cycliquement répétée dans des trames d'impulsions successives, des signaux M.I.C. qui à l'intérieur d'une trame d'impulsions sont délivrés par les points de connexion participant à une conférence et reçus par le circuit de commande central pour conférence sont dès leur réception, en étant au besoin linéarisés, immédiatement totalisés algébriquement, mis en mémoire temporairement et, en vue de leur transmission au point de connexion concerné participant à une conférence, soumis chaque fois, en excluant les signaux M.I.C. délivrés par ce point de connexion, à un traitement établissant leur somme partielle, des signaux M.I.C. correspondant aux sommes partielles sont envoyés, éventuellement après délinéarisation, au cours d'une trame d'impulsions ultérieure aux points de connexions participant à une conférence, et des intervalles de temps sont prévus à l'intérieur d'une partie déterminée de la trame d'impulsions concernée pour la transmission de signaux ne se rapportant pas à une conférence, caractérisé en ce que les signaux M.I.C. reçus et algébriquement totalisés sont, pour chaque point de connexion particulier, mis en mémoire temporairement au plus jusqu'à l'écoulement de la partie de trame prévue pour des signaux ne se rapportant pas à une conférence et située à la fin de la trame d'impulsions actuelle concernée, en ce que l'établissement de sommes partielles pour les différents participants et une mise en mémoire temporaire de ces sommes partielles se réalisent au cours de cette partie de trame et en ce que des signaux M.I.C. correspondant aux sommes partielles sont envoyés immédiatement après cette partie de trame, au début de la trame d'impulsions faisant immédiatement suite à la trame d'impulsions actuelle, aux points de connexion participant à une conférence.

2. Procédé selon la revendication 1, caractérisé en ce que des adresses relatives associées par l'unité centrale aux points de connexion participant à une conférence sont utilisées en même temps pour mettre temporairement en mémoire les signaux M.I.C. reçus et les sommes partielles ainsi que pour transmettre les sommes partielles.

3. Procédé selon la revendication 1 ou 2, caractérisé en ce que l'établissement des sommes partielles ainsi que leur mise en mémoire temporaire sont commandés par des signaux d'horloge auxiliaires dont la fréquence est de préférence égale au double de la cadence de succession des intervalles de temps.

4. Procédé selon la revendication 3, caractérisé en ce que les signaux d'horloge auxiliaires commandent également la génération de signaux d'adresses relatives et d'impulsions d'écriture-lecture pour la mise en mémoire temporaire des sommes partielles.

5. Procédé selon l'une quelconque des revendications 1 à 4, caractérisé en ce que les sommes partielles sont obtenues en retranchant, sous la commande de signaux d'horloge auxiliaires, de la somme des signaux les signaux M.I.C. individuels temporairement mis en mémoire jusqu'au début de ladite partie de trame.

6. Procédé selon l'une quelconque des revendications 1 à 5, caractérisé en ce que des impulsions d'écriture-lecture et des signaux d'adresses relatives destinés à commander des mémoires intermédiaires pour le processus de réception et le processus d'émission sont produits séparément lors de la partie d'une trame d'impulsions prévue pour les signaux se rapportant à une conférence.

7. Procédé selon la revendication 6, caractérisé en ce que lors de la réception et lors de l'émission se réalise chaque fois respectivement à la cadence de succession des intervalles de temps de réception ou d'émission un comptage d'adresses modulo-n pour un registre d'adresses relatives et pour un registre d'intervalles de temps de réception ou d'émission dont la commande d'écriture-lecture est activée en fonction de l'affectation des adresses relatives à des intervalles de temps de réception ou d'émission déterminés, n étant le nombre des intervalles de temps par trame d'impulsions.

8. Procédé selon la revendication 7, caractérisé en ce que chaque commande d'écriture-lecture provoque cycliquement avec le comptage d'adresses, au cours de la première demi-période d'un signal de cadence de succession d'intervalles de temps de réception ou d'émission, une lecture du registre d'intervalles de temps de réception ou d'émission et, au cours de la seconde demi-période, une écriture du contenu lu, celui-ci ayant éventuellement été modifié par une instruction d'activation d'intervalles de temps délivrée par l'unité centrale en combinaison avec une adresse relative associée à cette instruction et qui est en même temps inscrite dans le registre d'adresses relatives, et en ce qu'en présence d'un intervalle de temps de réception ou d'émission activé la commande d'écriture-lecture provoque, au cours du processus de lecture-écriture cyclique, une lecture du contenu du registre d'adresses relatives et du registre d'intervalles de temps concernés et une transmission des signaux lus, en tant que signaux d'adresses relatives et impulsions d'écriture, pour la mise en mémoire temporaire des signaux M.I.C. reçus ou une transmission des signaux lus, en tant que signaux d'adresses relatives et impulsions de lecture, pour la transmission des sommes partielles aux points de connexion participant à une conférence.

9. Procédé selon l'une quelconque des revendications 1 à 8, caractérisé en ce que par l'intermédiaire de plusieurs canaux de traitement parallèles les uns aux autres entre le récepteur et l'émetteur du circuit de commande de conférence central sont prises en charge simultanément plusieurs liaisons de conférence du fait que les sommes partielles des conférences partielles des différents canaux de traitement sont échangées entre elles et s'additionnent dans la mémoire totalisatrice correspondante d'un canal de traitement jusqu'à obtention de la somme totale de signaux de conversation, un critère permettant l'échange des sommes partielles étant à cette fin associé dans les canaux de traitement à un intervalle de temps de la partie de trame prévue pour des signaux ne se rapportant pas à une conférence.

10. Montage pour la mise en oeuvre du procédé selon l'une quelconque des revendications 1 à 9, comprenant un circuit de traitement qui, relié par l'intermédiaire d'un récepteur (106) et d'un émetteur (117) à la ligne multiplex (107) du réseau de télécommunications à multiplexage temporel M.I.C. et destiné à traiter les signaux M.I.C. reçus des points de connexion participant à une conférence, comporte éventuellement un circuit expanseur (104; 105) pour linéariser les signaux M.I.C. reçus, un dispositif d'addition-soustraction (108; 109) auquel est associé un registre totalisateur, éventuellement un circuit compresseur (116) pour délinéariser les signaux M.I.C. à émettre ainsi qu'une mémoire intermédiaire, le fonctionnement de ce circuit de traitement étant commandé par des signaux de commande (TTS, RTS, CP) et des signaux d'adresses relatives (TAD, RAD) qui sont obtenus par l'intermédiaire de circuits de commande logiques (102; 103; 112; 113) à partir d'instructions d'activation d'intervalles de temps, de signaux de cadence de succession d'intervalles de temps (RCL, TCL), de signaux de synchronisation d'intervalles de temps (RSY, TSY) et d'adresses relatives reçus à partir de l'unité centrale (CPU), caractérisé en ce que le circuit de traitement comporte entre le récepteur (106) et l'émetteur (117) au moins un canal de traitement qui contient, montés parallèlement l'un à l'autre un registre de mise en mémoire de réception (110, 111) et un dispositif d'addition-soustraction (108, 109) équipé d'un registre totalisateur et dont la partie soustractrice est connectée à la sortie du registre de mise en mémoire de réception (110, 111), ainsi qu'un registre de mise en mémoire d'émission (114, 115) faisant suite à ce montage parallèle.

11. Montage selon la revendication 10, caractérisé en ce qu'il est prévu entre le récepteur (106) et l'émetteur (117) plusieurs canaux de traitement parallèles entre eux (I, II) dont les signaux de commande et les signaux d'adresses relatives sont obtenus par l'intermédiaire de circuits de commande logiques (102, 103, 112, 113) qui leur sont communs.

12. Montage selon la revendication 10 ou 11, caractérisé en ce qu'il est prévu un premier circuit de commande logique (103) pour produire des signaux de commande et un second circuit de commande logique (113) pour produire des signaux d'adresses relatives et pour commander l'émission conjointe de signaux de commande et des signaux d'adresses relatives à l'intérieur de la trame d'impulsions concernée.

13. Montage selon la revendication 12, caractérisé en ce que le premier circuit de commande logique (103) est commandé par la cadence de succession d'intervalles de temps, alors que le second circuit de commande logique (113) est commandé par le signal d'horloge d'un générateur de cadence auxiliaire (112), lequel signal présente une fréquence double de celle de la cadence de succession d'intervalles de temps.

14. Montage selon la revendication 12 ou 13, caractérisé en ce que le premier circuit de commande logique (103) présente deux parties, fonctionnant séparément, destinées à délivrer des signaux de commande et des signaux d'adresses relatives et dont l'une attaque le ou les registre(s) de mise en mémoire de réception (110, 111) et l'autre attaque le ou les registre(s) de mise en mémoire d'émission (114, 115).

15. Montage selon la revendication 14, caractérisé en ce que les deux parties du premier circuit de commande logique (103) sont construites de manière semblable et comportent respectivement un compteur modulo-n (202, 212) commandé respectivement par la cadence de succession d'intervalles de temps de réception et d'émission (RCL, TCL) et comptant les intervalles de temps n d'une trame d'impulsions, les signaux de sortie du compteur modulo-n étant amenés par l'intermédiaire d'un multiplexeur (203) en tant que signaux d'adressage respectivement à un registre d'adresses relatives (204, 214) et à un registre d'intervalles de temps (205, 215) pour la mise en mémoire d'intervalles de temps activés d'une trame d'impulsions, lequel multiplexeur (203) peut être interconnecté par des signaux d'activation d'intervalles de temps d'une commande d'écriture-lecture (201, 211) attaquée par l'unité centrale (CPU) au moyen d'instructions d'activation d'intervalles de temps et d'adresses relatives afin d'activer un intervalle de temps dans le registre d'intervalles de temps (205, 215) et de mettre en même temps en mémoire l'adresse relative correspondante dans le registre d'adresses relatives (204, 214), en ce que la commande d'écriture-lecture (201, 211) réalise chaque fois durant deux demi-pas par période de succession d'intervalles de temps cycliquement une mise en mémoire dans le registre d'intervalles de temps respectif (205, 215) et une lecture de celui-ci, en modifiant éventuellement l'information lue à chaque fois, et en ce qu'en aval du registre d'intervalles de temps (205, 215) est monté un circuit de synchronisation (206, 216) par l'intermédiaire duquel, respectivement à la cadence de succession d'intervalles de temps de réception et d'émission (RCL, TCL), le contenu du registre d'adresses relatives (204, 214) est chaque fois amené avec un signal d'activation d'intervalles de temps correspondant issu du registre d'intervalles de temps (205, 215) respectivement au(x) registre(s) de mise en mémoire de réception (110, 111) et au(x) registre(s) de mise en mémoire d'émission (114, 115).

16. Montage selon l'une quelconque des revendications 12 à 15, caractérisé en ce que le second circuit de commande logique (113) comporte, en tant que circuit d'adressage, un compteur d'adresses auxiliaire (404) commandé par des impulsions d'horloge auxiliaires (ACL) et dont le volume de comptage correspond au nombre des points de connexion autorisés à participer à une conférence.

17. Montage selon la revendication 16, caractérisé en ce que le compteur d'adresses auxiliaire (404) est mis en route au niveau d'une entrée de déblocage (EN) par un signal délivré par le premier circuit de commande logique (103) au début de la partie de trame prévue pour des signaux ne se rapportant pas à une conférence et est remis à zéro après comptage du nombre de points de connexion autorisés à participer à une conférence.

18. Montage selon la revendication 16 ou 17, caractérisé en ce que les signaux de sortie du compteur d'adresses auxiliaire (404) sont envoyés en tant que signaux d'adresses relatives en parallèle sur plusieurs circuits OU (408, 409, 410) qui sont en outre attaqués par les signaux de sortie des circuits de synchronisation (206, 216) du premier circuit de commande logique (103) et dont les sorties délivrent des adresses relatives aux registres de mise en mémoire de réception (110, 111) et aux registres de mise en mémoire d'émission (114, 115).

19. Montage selon la revendication 17 ou 18, caractérisé en ce qu'au compteur d'adresses auxiliaire (404) sont associés un comparateur (406) et un circuit bistable (405), en ce que le comparateur compare les signaux de sortie du compteur d'adresses auxiliaire (404) avec une valeur préétablie correspondant au nombre de points de connexion autorisés à participer à une conférence et, lorsque cette valeur est atteinte, délivre un signal de remise à zéro pour le compteur d'adresses auxiliaire (404) et pour le circuit bistable (405) et en ce que le circuit bistable (405) peut être commuté par le signal délivré par le premier circuit de commande logique (103) et délivre à sa sortie le signal de déblocage pour le compteur d'adresses auxiliaire (404).

20. Montage selon la revendication 19, caractérisé en ce que le premier circuit de commande logique (103) comporte un circuit ET (411) attaqué par les impulsions d'horloge auxiliaires (ACL) et qui est en outre attaqué par le signal de déblocage pour le compteur d'adresses auxiliaire (404).

Arbeits-phasen | beliebiges Setzen von RTS u. TTS → | nur eventl. Setzen von RTS | Berechnung spez. Teilsummen | Kompressor-vorlauf | max. asynchr Vorlauf TTS

Löschimpuls CP 108 / 109

Hilfstakte ACL   0 1 2 3 4 5 6

Konferenzrelevante | Signale | → nicht Konf. rel. Sign. →

RTS /TTS  000 001 002 003 ... 244 245 246 247 248 249 250 251 252 253 254 255 000 001 002

$P_{n-1}$  aktueller Pulsrahmen $P_n$   $P_{n+1}$

125 µsec

TTS zulässige Grenzlagen

$P_n$ 255 000 $P_{n+1}$
Vorlauf

$P_n$ 255 000 $P_{n+1}$
Nachlauf

FIG.1

0 034 308

0 034 308

FIG. 2

19

FIG. 3

FIG. 4

FIG. 5